Europäisches Patentamt

European Patent Office

Office européen des brevets

(19)

(11) **EP 0 633 155 B1**

(12) **EUROPÄISCHE PATENTSCHRIFT**

(45) Veröffentlichungstag und Bekanntmachung des Hinweises auf die Patenterteilung:
**13.05.1998 Patentblatt 1998/20**

(51) Int. Cl.$^6$: **B60K 41/06**

(21) Anmeldenummer: **94890115.2**

(22) Anmeldetag: **05.07.1994**

(54) **Verfahren zur Steuerung des Antriebsstranges von Kraftfahrzeugen**

Control method for the drive train of motor vehicles

Méthode de commande de la chaîne de propulsion de véhicules à moteur

(84) Benannte Vertragsstaaten:
**AT DE ES FR GB IT**

(30) Priorität: **05.07.1993 AT 1319/93**

(43) Veröffentlichungstag der Anmeldung:
**11.01.1995 Patentblatt 1995/02**

(73) Patentinhaber:
**AUTO POLLY GESELLSCHAFT M.B.H.
2620 Neunkirchen (AT)**

(72) Erfinder:
**Polly, Johann, Dipl.-Ing.
A-2620 Neunkirchen (AT)**

(74) Vertreter:
**Weinzinger, Arnulf, Dipl.-Ing. et al
Patentanwälte
Sonn, Pawloy, Weinzinger & Wolfram
Riemergasse 14
1010 Wien (AT)**

(56) Entgegenhaltungen:
**WO-A-89/03319          DE-A- 2 926 106**

**Beschreibung**

Die Erfindung bezieht sich allgemein auf eine Kraftstoff sparende Steuerung der Leistung von Verbrennungsmotoren von Kraftfahrzeugen, die beispielsweise mit herkömmlichen Automatikgetrieben oder aber mit elektronisch gesteuerten Vorgelege-Stirnradgetrieben, mit automatisierten Trockenkupplungen und eventuell auch mit Schwungnutzautomatik ausgestattet sind.

Mehr im einzelnen betrifft die Erfindung ein Verfahren zur Steuerung eines Antriebsstranges eines Kraftfahrzeuges mit einem Verbrennungsmotor, mit einem Automatikgetriebe, z.B. einem automatischen Schaltgetriebe mit elektronisch gesteuerter mechanischer Trockenkupplung, und mit einem Fahrpedal, dem ein Sollwertgeber zugeordnet ist, bei welchem Verfahren

- Fahrpedalbewegungsabläufe überwacht und mit Hilfe eines Rechners bezüglich Motorleistungssteuerung und Schaltvorgänge analysiert werden,
- Schaltvorgänge aufgrund von abgespeicherten Motorkennfeldern und Schaltkennlinien sowie von mittels Sensoren erfaßten Betriebsparametern ausgelöst werden, und
- am Fahrpedalweg mit Hilfe des Rechners Kraftschwellen selektiv erzeugt werden, um Anzeigen für den Fahrer im Hinblick auf eine Verbrauchsoptimierung zu erzielen.

Bei bekannten elektronischen Motorleistungssteuerungen (vgl. z.B. DE-A-38 27 091, WO-A-87/05867 und WO-A-89/03319) dienen "elektronische" Fahrpedale als Sensoren bzw. Geber für die Steuerung der Verbrennungsmotoren (und auch der automatischen Getriebe). Sensorsignale entsprechend der jeweiligen Fahrpedalstellung werden üblicherweise zusammen mit weiteren Sensorsignalen, wie Informationssignalen betreffend die Motordrehzahl, die Motortemperatur, die Getriebeabtriebsdrehzahl und dergl. Betriebsdaten, über Eingangskreise und Analog/Digital-Wandler an eine Rechnerschaltung, üblicherweise mit Mikroprozessoren, angelegt, welche dann über Ausgangskreise mit Leistungselektronik-Schaltkreisen entsprechende Stelleinrichtungen zur Betätigung von Drosselklappen oder Einspritzpumpen-Verstellhebeln ansteuert. Mit dieser Elektronik- und Rechnerschaltung werden die verschiedensten Funktionen, wie z.B. Leerlaufstabilisierung, Drehzahlbegrenzung, Antriebsschlupfregelung, Fahrgeschwindigkeitsregelung ("Tempomat") und kurzzeitige Absenkungen des Motordrehmoments während Gangwechselvorgängen erfüllt.

Analysen des Leistungsbedarfes mit der größten Betriebshäufigkeit zeigen, daß bei Kraftfahrzeugen, insbesondere PKWs, die erforderliche Motorleistung sowohl für die häufigen Beschleunigungsvorgänge im Stadtverkehr als auch für die Überland-Konstantfahrt mit niederer bis mittlerer Geschwindigkeit meist bei 30% bis 50% der maximalen Motorleistung liegt. Dieser Leistungsbereich ist somit sowohl für den Verbrauch im Drittelmix als auch für den tatsächlichen durchnittlichen Kraftstoffverbrauch ausschlaggebend.

In diesem Leistungsbereich arbeiten vor allem Dieselmotoren von PKWs mit den heute üblichen Automatikgetrieben systembedingt meist nie im Bestbereich des Motor-Verbrauchskennfeldes. Dazu wären hohe Motordrehmomente bei entsprechend niederen Motordrehzahlen erforderlich. Dies ist jedoch mit den bisher bekannten automatischen Gangsteuerungen bei Dieselmotoren auch mittels E-Programm und adaptiven Schaltprogrammen nicht möglich, da beim Beschleunigen im mittleren Leistungsbereich bei einem für ein hohes Motordrehmoment mit optimalen Motorwirkungsgrad weiter durchgetretenem Fahrpedal bei niederer Motordrehzahl immer Rückschaltvorgänge ausgelöst werden.

Es wurde bereits vorgeschlagen (vgl. US-A-4 539 868), im Hinblick auf eine Optimierung im Kraftstoffverbrauch auf der Basis von Motor-Drehzahl und Motorlast Anzeigesignale zu erzeugen, um dem Fahrer zweckmäßige Schaltvorgänge optisch anzuzeigen. In vergleichbarer Weise werden bei der in der US-A-4 274 306 beschriebenen Vorrichtung Schaltsignale erzeugt, um für ein wirtschaftliches Fahres zweckmäßige Hochschaltungen oder Rückschaltungen dem Fahrer anzuzeigen oder selbsttätig auszulösen. Aus der DE-A-38 27 091 ist es ferner bekannt, einem gespeicherten Motorkennfeld ein Bewertungsfeld zu überlagern, um dadurch den jeweiligen Betriebspunkt zu bewerten und gegebenenfalls zum gewünschten Optimum hin zu verlagern.

Bei allen diesen bekannten Techniken ist jedoch unter anderem von Nachteil, daß Schaltvorgänge unabhängig von der allgemeinen Verkehrs- und Fahrsituation ausgelöst oder als notwendig angezeigt werden. Um den Motor möglichst lange bzw. möglichst häufig im Bestbereich zu halten, wäre es jedoch auch wesentlich, die Schalthäufigkeit in Grenzen zu halten, d.h. es wären unnötige bzw. vom Fahrer oft nicht gewollte Rückschaltvorgänge und damit auch die dann nachfolgend notwendig werdenden Hochschaltungen zu vermeiden; damit wäre es möglich, den Motor länger im Bestbereich des Verbrauchskennfeldes zu halten und Kraftstoff einzusparen.

Aus der WO-A-89/03319, die den Ausgangspunkt für die vorliegende Erfindung bildet, ist es andererseits bereits bekannt, Schaltvorgänge bei einem Automatikgetriebe unabhängig von den gespeicherten Schaltkennlinien selektiv mit Hilfe bestimmter Bewegungen des Fahrpedals auszulösen bzw. in bestimmten Fällen Hochschaltungen zu unterdrücken. Dieses bekannte System stellt somit einen wesentlichen Schritt in Richtung einer Symbiose Fahrer-Antriebsstrangsteuerung dar, läßt jedoch noch Wünsche hinsichtlich Verbrauchsoptimierung und Reduzierung der Schalthäufigkeit offen.

Zu erwähnen ist hier auch, daß sich immer deutlicher zeigt, daß den Automatikgetrieben konventioneller Bauart zumindest im PKW-Bereich trotz der jahrzehntelangen intensiven Weiterentwicklung ein Durchbruch bisher versagt blieb. Preis, Gewicht und Leistungsübertragungsverluste sowie vergleichsweise hoher Verbrauch verhindern bisher den breiten Erfolg der Automatikgetriebe.

Stufenlose CVT-Getriebe, die derzeit in der Kleinwagenklasse vereinzelt eingebaut werden, verursachen längere Beschleunigungszeiten und höheren Kraftstoffverbrauch. Der Gewinn an Motorwirkungsgrad wird vorerst durch den schlechteren Getriebewirkungsgrad überkompensiert. Ein breiter Erfolg dieser Bauart erscheint daher derzeit fraglich.

Das preisgünstige Stirnradgetriebe mit seiner hohen Kraftdichte, seiner hervorragenden Leistungsdichte und seinem sehr guten Wirkungsgrad wird in absehbarer Zeit seine Prävalenz wohl kaum verlieren. In Zukunft könnte der Übergang von der mechanischen zur elektronischen Gangsynchronisation die Vorteile dieser Bauart noch weiter vergrößern.

Da die Fahrer bei Handschaltgetrieben optimal verbrauchsgünstige lange Gänge nicht akzeptieren und selbst vorsichtig ausgelegte Schongänge viel zu wenig verwenden, werden heute die 5. Gänge meist wieder sportlich ausgelegt. Dies erhöht den Verbrauch an Kraftstoff, der zusätzlich durch die oft ungünstige Gangwahl der Fahrer noch vergrößert wird.

Sollen Kraftstoffverbrauch und $CO_2$-Emission unabhängig vom Können der Fahrer minimiert werden, ist daher die Automatisierung des Handschaltgetriebes (ASG-Getriebe) z.B. durch eine Schalt-Servoeinrichtung in Kombination mit einer automatisierten Trockenkupplung notwendig. Ganz wesentlich wird hier jedoch die Form der Steuerung des Antriebsstranges sein, und insbesondere wird hier die bereits angesprochene "Fahrer-Rechner-Vernetzung" bei der Entscheidungsfindung für die Auslösung von Schaltvorgängen und die Steuerung des Motordrehmoments von Bedeutung sein.

Es ist nun Ziel der Erfindung, eine Antriebsstrang-Steuerung wie eingangs angegeben vorzusehen, mit der im verstärkten Maße ein Zusammenwirken Fahrer-Rechner erzielt und so die Schalthäufigkeit begrenzt und der Verbrennungsmotor insgesamt anteilsmäßig über größere Zeiträume im Bestbereich des Verbrauchskennfeldes gehalten wird, so daß der Motor mehr als bisher mit optimalem Wirkungsgrad arbeiten kann und somit Einsparungen im Kraftstoffverbrauch erzielt werden können. Vor allem sollen hierbei auch vom Fahrer nicht gewollte bzw. nicht erforderliche Rückschaltvorgänge, die den Motor aus dem Bestbereich herausführen und nachfolgend wieder Hochschaltvorgänge erzwingen würden, möglichst vermieden werden.

Demgemäß ist das erfindungsgemäße Verfahren der eingangs erwähnten Art dadurch gekennzeichnet, daß

- der Verbrennungsmotor mit Hilfe des Rechners jeweils vor Erreichen eines Rückschaltvorganges bzw. einer Kraftschwelle am Fahrpedalweg korrektiv zur Fahrpedalstellung auf das bei der jeweiligen Motordrehzahl maximal mögliche Motordrehmoment gesteuert wird,
- wobei der vom Rechner korrektiv bewirkte Drehmomentanstieg entlang des Fahrpedalweges bis zum jeweiligen Rückschaltpunkt bzw. bis zur jeweiligen Kraftschwelle kontinuierlich erfolgt.

Vorteilhafte Ausführungsformen und Weiterbildungen sind in den Unteransprüchen angegeben.

Mit einer derartigen Vorgangsweise - in Weiterentwicklung der Steuerung gemäß WO-A-89/03319 - kann eine Fahrer-Rechner-Symbiose erzielt werden, die es ermöglicht, auch bei sechs und mehr Gängen und einem verbrauchsoptimalen Overdrivebereich die Schalthäufigkeit zu reduzieren und die größte Betriebshäufigkeit des Motors weitgehend in Motorkennfeldbereiche mit optimalem Motorwirkungsgrad zu verschieben, und zwar mit einer rechnergesteuerten Optimierung, so daß das "Können" des Fahrers beim Treten des Fahrpedals keine Rolle spielt; weiters können hier Energieverluste durch das Motorschleppmoment eliminiert werden. Auch dem im Vergleich zu Handschaltgetrieben größeren Leistungsübertragungsverlust konventioneller Automatikgetriebe kann dabei entgegengewirkt werden. Der Fahrer kann sich jederzeit mühelos mit dem Fahrpedal, beispielsweise für Beschleunigungsvorgänge, entsprechend leistungsstärkere Gänge holen, und vom Fahrer nicht gewollte Rück- und Hochschaltvorgänge können unterdrückt werden. Mit Kraftschwellen am Fahrpedalweg, die als Hemmschwellen wirken, und zwar vor dem Auslösepunkt für einen Rückschaltvorgang, wird die Vermeidung unbeabsichtigter Rückschaltungen erleichtert. Dabei wird der Motor bereits bei einer Fahrpedalstellung vor der Hemmschwelle auf das maximale Drehmoment gesteuert. Mit einem auf diese Weise realisierbaren verbrauchsoptimalen Overdrivebereich kann im Überlandverkehr in dem dort häufigsten Geschwindigkeitsbereich von 100-150 km/h eine wesentliche Verbrauchseinsparung erwartet werden. Im Stadtverkehr gelingt es durch die Vernetzung der Entscheidungsfindung zwischen Fahrer und Rechner, die Motorbetriebspunkte, insbesondere in den Beschleunigungsphasen mit kleinerem bis mittlerem Leistungsbedarf, in sparsamere Motorkennfeldbereiche zu verschieben; dadurch kann ebenfalls eine beträchtliche Kraftstoffeinsparung erzielt werden.

Bei Anwendung des vorliegenden Verfahrens verlaufen im Stadtverkehr und auf Landstraßen die Beschleunigungsphasen auch im niederen bis mittleren Drehzahlbereich fast immer mit einem hohen verbrauchsoptimalen Drehmoment. Die Rasanz der Beschleunigung bestimmt der Fahrer so wie bisher mit der Fahrpedalstellung, wobei beim vorliegenden Verfahren damit primär die Wahl des Drehzahlbereiches erfolgt. Wenn das Motordrehmoment nach jedem Schaltvorgang vom Rechner vorerst immer verbrauchsoptimal gesteuert wird, ist damit die Größenordnung der Motorleistung bestimmt.

Je nach Straßenverlauf und Verkehrsgeschehen werden so, ohne bewußtes Bemühen der Fahrer, auf meist eher kurze Beschleunigungsphasen mit optimalem Motorwirkungsgrad, beispielsweise auf Steigungen oder nach Straßenkreuzungen und engen Kurven, längere Leerlaufphasen ohne Schleppmomentverluste folgen. Im Schnitt wird sich dadurch, im Zusammenwirken mit dem langen Overdrivebereich auch bei kleineren Fahrgeschwindigkeiten, eine wesentliche Verbesserung des Motorwirkungsgrades ergeben.

Wenn im Stadtverkehr die durch das Bremsen vernichtete kinetische Energie auch nur geringfügig kleiner wird, so wird doch der Treibstoffaufwand auch für diese kinetische Verlustenergie durch den optimalen Motorwirkungsgrad während der Beschleunigungsphasen deutlich kleiner.

Für Klein-, Kompakt- und Mittelklassewagen, die immer noch fast ausschließlich mit Handschaltgetrieben ausgerüstet werden, ermöglicht die vorliegende Antriebsstrang-Steuerung einen substantiellen Gewinn an Komfort und sowohl im Drittelmix wie im praktischen Fahrbetrieb rund 20 % Kraftstoffeinsparung und damit auch 20% $CO_2$-Absenkung. Weder Reduktionen im Fahrzeuggewicht, noch Verbesserungen der Aerodynamik, noch weitere motortechnische Verbesserungen bieten ein auch nur annähernd vergleichbares Sparpotential.

Insbesondere ist es erfindungsgemäß von Vorteil, wenn der Verbrennungsmotor nach jedem durch Überwinden einer Kraftschwelle am Fahrpedalweg ausgelösten Rückschaltvorgang, nach jedem Hochschaltvorgang während eines Beschleunigungsvorganges sowie beim ersten Fahrpedalruhepunkt nach einer Pedalnullstellung mit Hilfe des Rechners, wenn eine vorgegebene Mindest-Fahrgeschwindigkeit, z.B. 16 km/h, überschritten ist, korrektiv zur Fahrpedalstellung vorerst auf ein verbrauchsoptimales Drehmoment gesteuert wird, welches erst bei einer nachfolgenden Pedalrücknahme in Entsprechung zum Rücknahmeweg verringert wird, welches jedoch bei einem weiteren Durchtreten des Fahrpedals bis zum nächsten Rückschaltpunkt bzw. bis zur Kraftschwelle am Fahrpedalweg auf das maximal mögliche Drehmoment erhöht wird.

Wie vorstehend dargelegt, soll die Leistungssteuerung des Motors derart vorgenommen werden, daß am Fahrpedalweg bereits bei Erreichen des im Automatikgetriebe für die augenblickliche Drehzahl festgelegten Rückschaltpunktes oder kurz vor Erreichen dieses Rückschaltpunktes das bei der jeweiligen Motordrehzahl mögliche maximale Motordrehmoment bzw. das Motordrehmoment mit maximalem Motorwirkungsgrad angesteuert werden, und diese Ansteuerung erfolgt - abhängig von anderen Größen, wie der Drehzahl - mittels der entsprechenden Einspritzmenge. In diesem Zusammenhang hat es sich ferner als besonders vorteilhaft erwiesen, wenn das Drehmoment des Verbrennungsmotors entlang des Fahrpedals, abgesehen von einem etwaigen Antriebsschlupfregelungs-Eingriff, immer zumindest auf einen Wert gemäß der Beziehung

$$M = M_{max} \left( S/S_{sp} \right)^a$$

gesteuert wird, wobei

M      das momentan anzusteuernde Motordrehmoment ist;

$M_{max}$      das im jeweiligen Zeitpunkt höchstmögliche Drehmoment ist;

S      der im jeweiligen Zeitpunkt gegebene Fahrpedalweg ist;

$S_{sp}$      der jeweilige Fahrpedalweg zur Auslösung eines Rückschalt-Vorganges ist; und

a      eine vorgegebene, z.B. vom jeweiligen Getriebegang abhängige Größe ist und beispielsweise 0,5-1,5, vorzugsweise 1,25, bet rägt.

Selbstverständlich kann dabei der Wert für a je nach Fahrzeug- oder Motortyp auch anders gewählt werden. Jedenfalls kann aufgrund der vorstehend als bevorzugt angegebenen Beziehung die erforderliche Einspritzmenge in der Elektronik auf an sich übliche Weise direkt berechnet werden, wobei in der Regel die Einspritzmenge bei Dieselmotoren über weite Bereiche dem Motordrehmoment direkt proportional ist.

Im Sinn der angestrebten Vernetzung der Entscheidungsfindung für die vorliegende Leistungsteuerung kann auch vorgesehen werden, daß ungünstige Motorwirkungsgrade nach einem Zurücknehmen des Fahrpedals dann, wenn ein Hochschalten möglich ist, beispielsweise optisch, akustisch oder durch Pulsieren des Fahrpedals (haptisches Signal) angezeigt werden, wobei jedoch die Querbeschleunigungen (die z.B. aus den Raddrehzahlinformationen eines Antiblockiersystem-Steuergeräts errechnet werden) und bei Bergfahrten sowie erhöhten Fahrwiderständen, aber auch eine bestimmte Zeitdauer nach durch einen Fahrpedalruck ausgelösten Rückschaltungen dieses Signal unterdrückt wird. Damit wird dem Fahrer ein Betrieb in einem ungünstigen Wirkungsgradbereich angezeigt, so daß er dann, wenn eine solche Signalisierung erfolgt, subbewußt durch kurzes weiteres Zurücknehmen des Fahrpedals bewußt einen Hochschaltvorgang auslösen kann, um so den Motor in den Bereich mit hohem Wirkungsgrad zu bringen.

Um den Motor im Arbeitsbereich mit günstigem Wirkungsgrad zu halten und die Schalthäufigkeit zu reduzieren, kann bei Vorliegen von zwei verschiedenen Hochschaltkennlinien- Gruppen, einerseits E-Programm-Hochschaltkennlinien, für wirtschaftliche Fahrweise, und andererseits S-Programm-Hochschaltkennlinien, für sportliche Fahrweise, überdies zur Steuerung in den Bereich mit höheren Motorwirkungsgrad bei gleichbleibender oder sinkender Fahrgeschwindigkeit von den E-Programm-Hochschaltkennlinien auf die S-Programm-Hochschaltkennlinien umgeschaltet werden, die beim Zurücknehmen des Fahrpedals wirksam werden. Es ist demgemäß nach der Erfindung von besonderem Vorteil, wenn automatische Hochschaltungen in der Zeit während und 1-2 Sekunden nach Beschleunigungsvorgängen gemäß Hochschaltlinien, die Economy-Schaltlinien entsprechen, ausgelöst werden, dagegen Hochschaltungen bei gleichbleibender oder sinkender Fahrgeschwindigkeit, bei einer Fahrpedalrücknahme, durch selbsttätiges Umschalten nach Hochschaltlinien ausgelöst werden, die tiefer liegen als die Economy-Schaltlinien. Bei dieser Ausführungsform schaltet die Steuerung also während Beschleunigungsvorgängen grundsätzlich das Automatikgetriebe auf die Hochschaltkennlinien des E-Programms für ökonomische Fahrweise, während die Hochschaltungen bei gleichbleibender oder sinkender Geschwindigkeit, die durch Zurücknehmen des Fahrpedals ausgelöst werden, durch die selbsttätige Umschaltung der Steuerung gemäß den tiefer liegenden Hochschaltkennlinien (des Sportprogrammes) erfolgen. Damit werden Hochschaltungen bei den im Verkehr sehr häufig notwendigen geringfügigen Zurücknahmen des Fahrpedals vermieden. Im übrigen können die Hochschaltkennlinien in an sich herkömmlicher Weise als adaptive Hochschaltkennlinien, wie bei heutigen Automatikgetrieben bereits bekannt, ausgelegt sein, um so den Fahrertyp, Fahrsituationen bzw. Vorgänge in der Umwelt zu berücksichtigen.

Wird bei Vorliegen der erfindungsgemäßen Steuerung im Betrieb eines Kraftfahrzeuges zur Fahrzeugbeschleunigung das Fahrpedal beispielsweise bis zu 50% des maximalen Pedalweges betätigt, dann erfolgen die Hochschaltvorgänge im Automatikgetriebe an den üblichen Hochschaltkennlinien, insbesondere jenen eines sog. E-("Economy"-)Programms. So lange das Fahrpedal nicht zurückgenommen wird, läuft der Motor dann während des Beschleunigungsvorganges grundsätzlich immer mit maximalem Drehmoment und damit im Bestbereich des Motorkennfeldes. Wird das Fahrpedal zurückgenommen, so wird das Motormoment entsprechend dem Verlauf der drehzahlspezifischen Kurven sofort reduziert. Bei dem dann kleineren Pedalweg schaltet das Automatikgetriebe während des Beschleunigungsvorganges früher hoch. Im höheren Gang und somit in einem Bereich mit kleinerer Motordrehzahl und damit Motorleistung läuft der Motor dann wieder mit hohem Drehmoment und damit mit gutem Motorwirkungsgrad.

Aus Sicherheitsgründen ist es auch vorteilhaft, wenn Hochschaltungen bei gleichbleibender oder fallender Fahrgeschwindigkeit, während Fahrzeug-Querbeschleunigungen, die beispielsweise aus den Raddrehzahlinformationen eines Antiblockiersystem-Steuergerätes errechnet werden, und bei einer Bergfahrt, die aus Parametern errechnet wird, oder bei erhöhten Fahrwiderständen unterdrückt werden.

Zur angestrebten Reduktion der Schalthäufigkeit ist es auch zweckmäßig, wenn Hochschaltungen ein bestimmtes Zeitintervall nach durch einen kurzen Druck auf das Fahrpedal ausgelösten Rückschaltvorgängen unterdrückt werden, solange keine wesentliche Drehzahlsteigerung oder eine Fahrpedalnullstellung erfolgt.

Eine weitere vorteilhafte Weiterbildung des erfindungsgemäßen Verfahrens ist dadurch gekennzeichnet, daß zum Halten des Verbrennungsmotors im Bereich mit hohem Drehmoment bzw. hohem Wirkungsgrad mit Hilfe des Rechners jeweils Kraftschwellen als Hemmschwellen selektiv am Fahrpedalweg generiert werden. Die elektronisch gesteuerten Kraftschwellen oder Hemmschwellen am Fahrpedalweg werden dabei jeweils selektiv vor Erreichen eines Rückschaltpunktes durch die Steuerung aufgebaut, um so unnötige bzw. vom Fahrer nicht gewollte Rückschaltvorgänge zu vermeiden und den Fahrer zu veranlassen, den Motor so oft bzw. so lange wie möglich im Bereich mit optimalem Wirkungsgrad arbeiten zu lassen.

Demgemäß ist es auch besonders günstig, wenn bei jeder von der Nullstellung des Fahrpedals ausgehenden Pedalbewegung, beim Anfahrvorgang und während der Fahrt, durch eine Hemmschwelle am Fahrpedalweg jene Fahrpedalstellung für die Hochschaltdrehzahl angezeigt wird, die den folgenden Beschleunigungsvorgang im wirkungsgradoptimalen Motordrehzahlbereich hält. Auch ist es von Vorteil, wenn durch die Generierung von Hemmschwellen am Fahrpedalweg, an den von den Rückschaltelinien und der Fahrgeschwindigkeit bzw. der Motor-Drehzahl abhängigen Auslösepunkten für Rückschaltvorgänge, dem Fahrer nicht unbedingt erforderliche Rückschaltvorgänge signalisiert werden, um den Verbrennungsmotor während der Beschleunigungsphasen durch die Stellung des Fahrpedals an der Hemmschwelle im optimalen Wirkungsgradbereich zu halten. Auf diese Weise ist es möglich, nicht unbedingt erforderliche Rückschaltvorgänge bewußt zu unterdrücken und den Verbrennungsmotor so lange wie möglich im Bereich mit optimalem Wirkungsgrad zu halten.

Zur Erzeugung der genannten Kraft- oder Hemmschwellen hat es sich als besonders vorteilhaft erwiesen, wenn die Hemmschwellen mit einer im Fahrpedal-Sollwertgeber vorgesehenen Friktionsscheibe durch einen elektro- magnetischen Aktuator erzeugt werden, wobei bei Ansteuerung des Aktuators durch den Rechner ein erhöhtes Reibungsmoment an der Friktionsscheibe erzeugt wird. Üblicherweise ist im Fahrpedalsollwertgeber eine in beiden Bewegungsrichtungen wirksame Friktionsscheibe vorgesehen, um so eine Hysterese zwischen den Pedalbewegungsrichtungen und damit konstante Fahrpedalstellungen vorzusehen. Diese Friktionsscheibe kann nun an sich zusätzlich zur Erzeugung der beschriebenen Kraftschwellen herangezogen werden. Andererseits ist es aber auch möglich und zu bevorzugen, eine eigene, zweite Friktionsscheibe zusätzlich zu dieser herkömmlichen Friktionsscheibe vorzusehen. In beiden Fällen wird von der Friktionsscheibe dann, wenn der elektromagnetische Aktuator von der Steuerung her, d.h. von der Rechnerschaltung, angesteuert wird, ein entsprechendes Reibungsmoment erzeugt. Dieses Reibungsmoment wird jedoch bevorzugt nur bei einer Fahrpedal-Vorbewegung, nicht jedoch bei einer Fahrpedalrücknahme wirksam, wozu eine eigene, auf einem bei einer Fahrpedalrücknahme wirksamen Freilauf angeordnete Friktionsscheibe eingesetzt wird.

Für die angestrebte Hemmschwellen-Erzeugung vor den jeweiligen Rückschaltpunkten hat es sich auch als vorteilhaft erwiesen, wenn im Sollwertgeber zur Übertragung des Reibungsmoments der Friktionsscheibe auf die Sollwertgeber-Welle eine elastische Scheibenkupplung angeordnet und die Hemmschwellenkraft am Fahrpedalweg bereits einige mm, z.B. 3 bis 5 mm, vor dem Auslösepunkt für einen Rückschaltvorgang im Rechner festgelegt wird und bis zum Auslösen des Schaltvorganges kontinuierlich ansteigt, wobei gleichzeitig durch die Drehung der Sollwertgeber-Welle das Motordrehmoment vom verbrauchsoptimalen Drehmoment bis zum maximal möglichen Drehmoment gesteigert wird.

Zur Kraftstoffeinsparung ist es schließlich auch vorteilhaft, wenn mit Hilfe des Rechners die automatisierte Kupplung bei einer Fahrpedalnullstellung ausgekuppelt wird, ausgenommen jedoch, wenn eine Fahrzeugbeschleunigung eintritt bzw. aus Parametern vorausberechnet auftreten wird sowie bei Betätigung des Bremspedals, wobei jedoch sofort nach einer Bremspedalfreigabe wieder ausgekuppelt wird.

Mit dem vorliegenden Steuerverfahren wird also jeweils sichergestellt, daß der Motor so oft bzw. so lange wie nur möglich im Bereich mit hohem Wirkungsgrad bzw. mit hohem Drehmoment arbeitet, und insbesondere kann erstmals bei einem Automatikgetriebe der Fahrer auch ungewollte Rückschaltvorgänge und damit auch die dann nachfolgend notwendigen Hochschaltvorgänge vermeiden, andererseits Schaltvorgänge, beispielsweise vor Überholvorgängen, bereits vorzeitig allein über das Fahrpedal auslösen, ohne mit Schaltarbeit belastet zu werden.

Die Erfindung wird nachstehend anhand von Ausführungsbeispielen sowie unter Bezugnahme auf die beiliegenden Zeichnungen noch weiter erläutert. Es zeigen:

Fig.1 ein Beispiel eines Verbrauchskennfeldes, und zwar für einen 1,9 Liter-Turbo-Dieselmotor;
Fig.2 dieses Verbrauchskennfeld nach Fig.1, wobei zusätzlich Leistungshyperbeln und Fahrwiderstandslinien eines Mittelklassewagens eingezeichnet sind;
Fig.3 in einem Diagramm eine statistische Auswertung der Häufigkeitsverteilung (in %-Angaben) der bei typischen Stadtfahrten auftretenden Geschwindigkeits- und Beschleunigungswerte;
Fig.4 eine typische Verteilung von Motorbetriebspunkten in einem Verbrauchskennfeld-Diagramm;
Fig.5 schematisch, teilweise in einem Blockschaltbild, eine Vorrichtung zur Steuerung eines Antriebsstranges eines Kraftfahrzeuges;
Fig.6 eine schaubildliche Ansicht eines Fahrpedals mit Lagerung und Sollwertgeber-Einheit;
Fig.7 eine teilweise aufgebrochene Ansicht einer derartigen Sollwertgeber-Einheit, die eine eigene Hemmschwellen-Friktionsscheibe enthält;
Fig.8 in einem schematischen Diagramm mögliche Fahrpedal-Bewegungsabläufe zur - an sich bekannten - Auslösung von Schaltvorgängen;
Fig.9 und 10 schematisch in Diagrammen mit der vorliegenden Steuerung (ausgezogene Linien) bzw. mit einer Fahrzeuggewichtsreduktion (gestichelte Linien) beispielsweise erzielbare Verbrauchsreduktionen;
Fig.11 ein Beispiel für Hochschaltkennlinien für einen Antriebsstrang mit Automatikgetriebe;
Fig.12 ein entsprechendes Diagramm mit Hochschaltkennlinien, zur Veranschaulichung der Umschaltung von der einen Gruppe von Hochschaltkennlinien auf eine andere Gruppe von Hochschaltkennlinien im Rahmen der erfindungsgemäßen Steuerung.
Fig.13 ein Flußdiagramm zur Veranschaulichung einer speziellen Ausführungsform im Rahmen des erfindungsgemäßen Steuerverfahrens zur Ansteuerung des Arbeitsbereiches mit hohem Wirkungsgrad; und
die Fig.14 und 15 Flußdiagramme zur Illustration der Hemmschwellensteuerung und Steuerung des Motordrehmoments vor und nach einem Rückschaltvorgang.

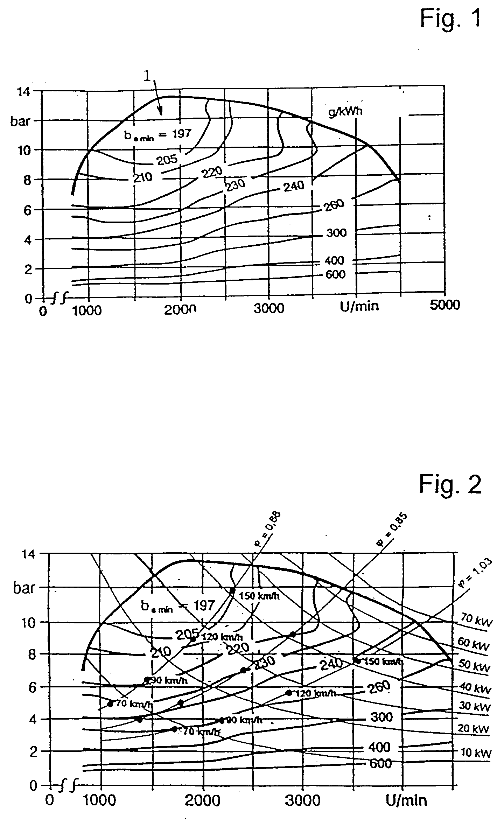

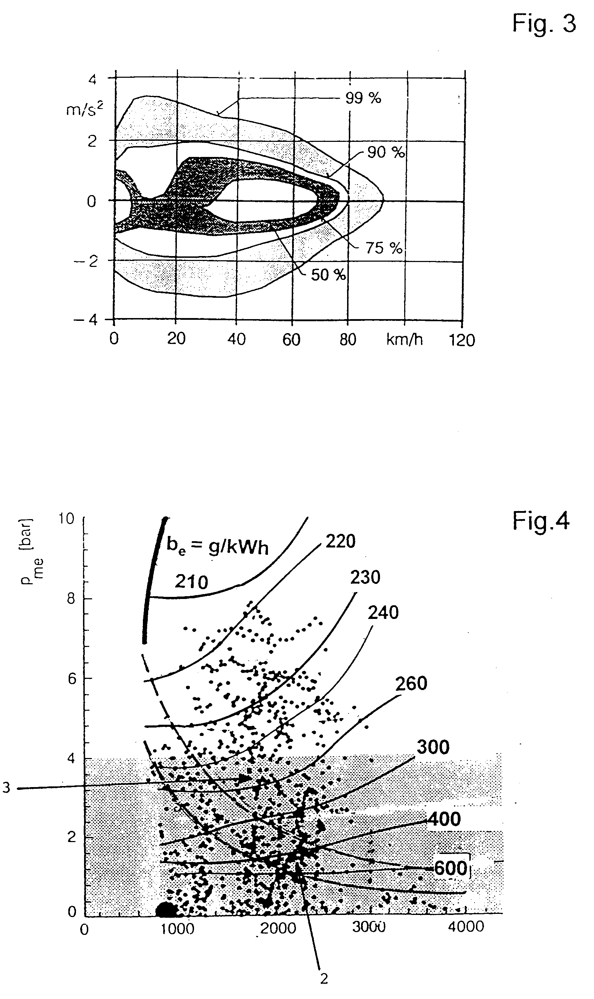

In Fig.1 ist ein Beispiel eines Verbrauchskennfeldes gezeigt, und zwar für einen Turbo-Dieselmotor mit Direkteinspritzung und 1,9 Liter-Hubraum, wobei im Diagramm von Fig.1 auf der Ordinate die Drehzahl in U/min und auf der Abszisse der effektive Mitteldruck in bar aufgetragen sind. In diesem Diagramm sind Kennlinien für verschiedene Werte des spezifischen Verbrauchs (in g/kWh) veranschaulicht, und in der Praxis ergibt sich - vgl. auch Fig.3 und 4 -, daß der Motors häufig in Bereichen mit ungünstigem Verbrauch betrieben wird. Optimal hinsichtlich des Wirkungsgrades wären Betriebspunkte mit hohen Drehmoment (im gezeigten Beispiel etwa entsprechend ca. 12 bar Mitteldruck, und zwar bei Drehzahlen im Bereich von 1500 bis 2000 U/min, wie in Fig.1 bei 1 angedeutet ist. Anzustreben ist daher mit der vorliegenden Steuerung die Betriebspunktverlagerung zum optimalen Arbeitsbereich (mit niedrigerer Drehzahl und hoher Last). Dadurch kann der Kraftstoffverbrauch reduziert werden, abgesehen davon, daß auch das Motorgeräusch vermindert werden kann. Bei hermömmlichen Dieselmotoren ist es derzeit auch mittels E-Programm und adaptiven Schaltprogrammen jedoch nicht möglich, diesen Bestbereich mit größtmöglichem Motormoment bei einer entsprechend niederen Motordrehzahl zu erreichen, da beim Beschleunigen mit niedriger Motordrehzahl, bei einem für hohe Drehmomente weiter durchgetretenem Fahrpedal, insbesondere in den höheren Gängen, in der Regel Rückschaltvorgänge ausgelöst werden.

Das Diagramm von Fig.2 entspricht jenem von Fig.1, wobei zusätzlich typische Leistungshyperbeln (in kW) und Fahrwiderstandslinien (für verschiedene Fahrwiderstände φ) eines Mittelklassewagens eingezeichnet sind. Das große Kraftstoffeinsparpotential eines verbrauchsoptimalen Overdrivebereichs wird dadurch sichtbar. Voraussetzung für die Verwendung eines langen Ganges mit einem φ < 0,7 ist jedoch, daß der Fahrer sich jederzeit mühelos mit einem Fahrpedal, beispielsweise für Beschleunigungsvorgänge, entsprechend leistungsstärkere Gänge holen kann (was an sich bekannt ist) und zusätzlich vom Fahrer nicht gewollte Rück- und Hochschaltvorgänge unterdrückt werden.

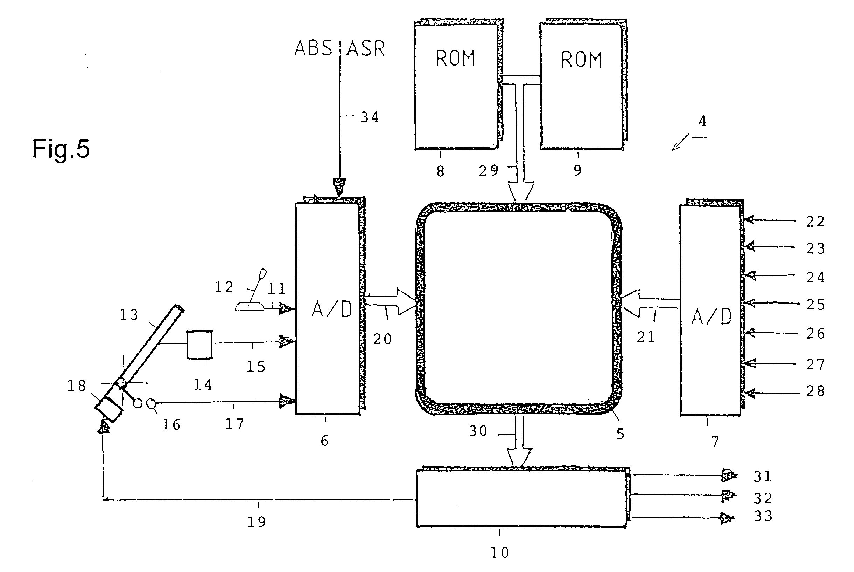

Mit der vorliegenden, nachstehend noch näher zu beschreibenden Steuerung gelingt es nun durch die Vernetzung der Entscheidungsfindung zwischen Fahrer und Rechner, im Stadtverkehr ebenso wie im Überlandverkehr die Motorbetriebspunkte in sparsamere Motorkennfeldbereiche zu verschieben und unnötige bzw. ungewollte Schaltvorgänge hintenanzustellen. Fig.3 zeigt zur Illustration eine statistische Auswertung der Häufigkeitsverteilung der bei typischen Stadtfahrten auftretenden Geschwindigkeits- und Beschleunigungswerte (letztere auch negativ, d.h. Abbremsung). Der Fig.4 kann ferner entnommen werden, daß ein großer Teil der Motorbetriebspunkte - die bei relativ hohen Drehzahlen und niederen Drehmomenten liegen, vgl. den mit 2 angegebenen Bereich - in niedere Drehzahlbereiche mit höheren Drehmomenten (s. Fig.1 und 2) und damit in Kennfeldbereiche (1 in Fig.1) mit wesentlich besserem Motorwirkungsgrad verschoben werden könnte. Ein nicht unbeträchtlicher Teil der Betriebspunkte kann mit der vorliegenden Steuerung beispielsweise von dem Bereich 2 in Fig.4 mit einem spezifischen Verbrauch von ca. 500 g/kWh in einem Bereich 3 mit 260 g/kWh verlegt werden. Eine derartige Steuerung kann mit der heute in Kraftfahrzeugen üblichen Elektronik bewerkstelligt werden, und in Fig.5 ist nur ganz schematisch eine Vorrichtung mit einer derartigen Elektronik gezeigt. In diesem Zusammenhang kann auch auf die WO-A-89/03319 verwiesen werden.

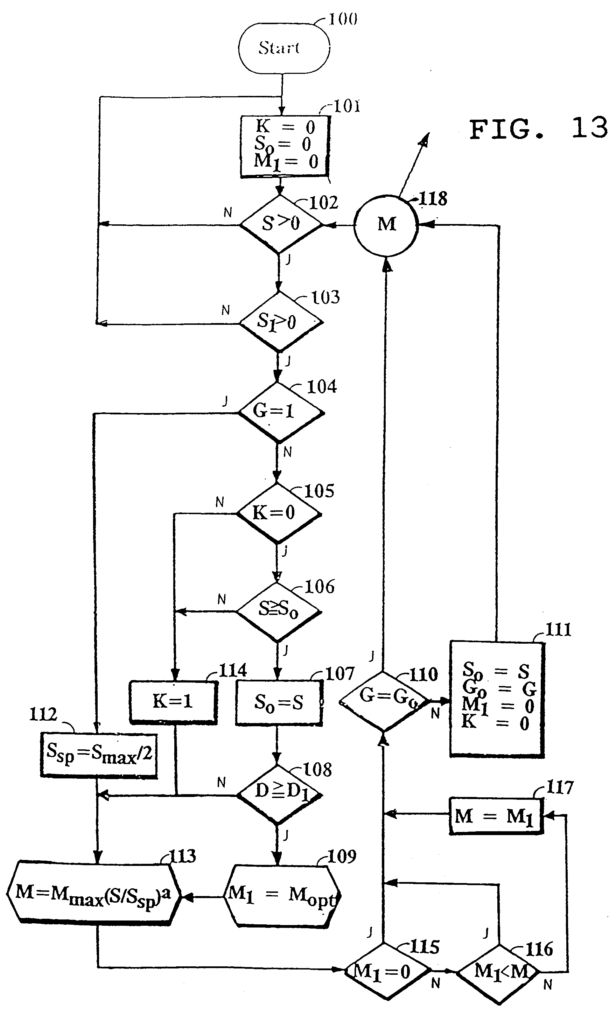

Im einzelnen ist in Fig.5 eine allgemein mit 4 bezeichnete Prozessor-Steuereinheit zur automatischen Steuerung eines KFZ-Antriebsstranges schematisch veranschaulicht, wobei auch Anschlußleitungen zu - an sich herkömmlichen und daher nicht näher dargestellten - Sensoren bzw. Stellantrieben schematisch dargestellt sind. Im einzelnen ist die Prozessor-Steuereinheit 4 mit einem Mikroprozessor 5 veranschaulicht, der eingangsseitig an A/D-Wandler 6, 7 angeschlossen und überdies mit Speichern 8, 9, vorzugsweise ROM-Speichern, verbunden ist. Dabei sind im einen ROM, z.B. 8, fahrzeugspezifische Daten, d.h. Parameter bzw. Kennwerte, nämlich insbesondere die sog. Motorkennfelder wie auch Drosselklappenkennfelder (etwa gemäß Fig.1) gespeichert, wogegen im anderen ROM 9 feste Programmmodule für den Ablauf der zu beschreibenden automatischen Steuerung (etwa gemäß den Flußdiagrammen nach Fig.13 bis 15) gespeichert sind. Ausgangsseitig ist an den Mikroprozessor 5 ein Leistungselektronik-Ausgangskreis 10 angeschlossen, um die verschiedenen zu beschreibenden Ansteuerungen zu bewerkstelligen.

Die A/D-Wandler 6, 7 setzen die verschiedenen, von Sensoren, die einzelnen Fahrzeugkomponenten zugeordnet sind, kommenden analogen Signale in eine digitale Form um, mit einer entsprechenden Aufbereitung zur Verarbeitung durch den Mikroprozessor 5, wie dies an sich bekannt ist und hier keiner näheren Erläuterung bedarf.

Im einzelnen ist der A/D-Wandler 6, abgesehen von einer nicht näher dargestellten Verbindung zu einem nicht gezeigten Bremspedal, über eine Leitung 11 mit einem Schalthebel 12 verbunden, mit dem beispielsweise in an sich herkömmlicher Weise bestimmte Schalt-Vorgaben, etwa zum Anfahren oder zum Rückwärtsfahren, getroffen werden können.

In Fig.5 ist sodann ein Fahrpedal 13 veranschaulicht, dessen Funktion als Leistungssteuerorgan zur Steuerung der Motorleistung auf elektronische Weise an sich bekannt ist. Dabei wird die Stellung des Fahrpedals 13 laufend von einem Geber 14, dem Leistungs-Sollwertgeber, erfaßt, und ein entsprechendes Signal wird von diesem Sollwertgeber 14 über eine Leitung 15 an einen weiteren Eingang des A/D-Wandlers 6 gelegt. Aus Sicherheitsgründen ist ferner ein die Null- oder Leerlaufstellung des Fahrpedals 13 erfassender Sensor 16 vorgesehen, der über eine Leitung 17 ein entsprechendes Nullstellungs-Signal (S1 in Fig.13) an den A/D-Wandler 6 anlegt.

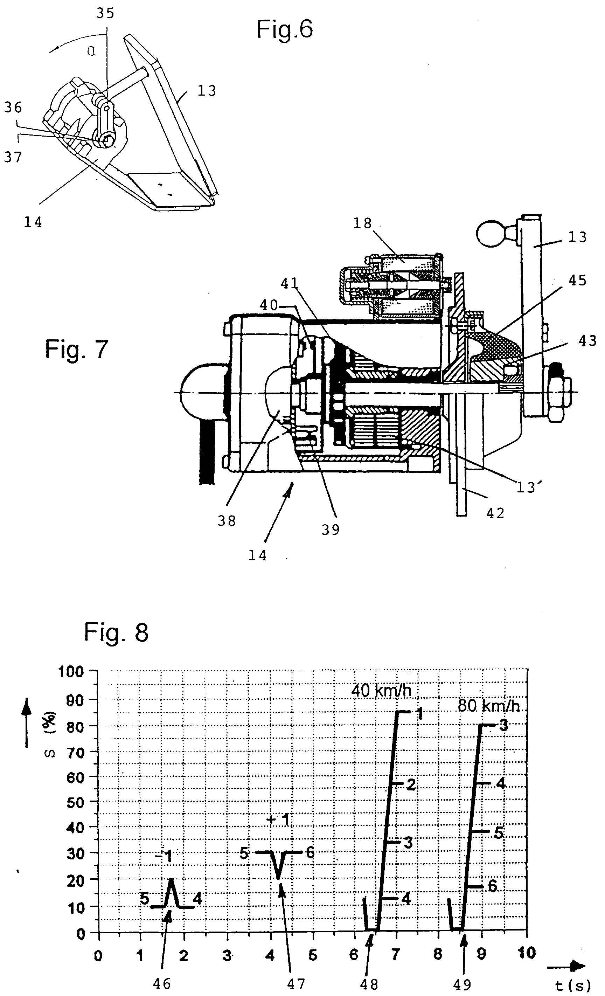

Dem Fahrpedal 13 ist weiters ein elektromechanischer Aktuator 18 zugeordnet, der eine als Hemmschwelle empfundene Kraftschwelle am Fahrpedal 13 herbeiführen kann, und der über eine Leitung 19 vom Ausgangskreis 10 her durch den Mikroprozessor 5 angesteuert wird, wie nachstehend anhand der Fig.6 und 7 noch näher erläutert werden wird.

Vom A/D-Wandler 6 gelangen die digitalisierten, aufbereiteten Signale über einen Bus 20 zum Mikroprozessor 5. In ähnlicher Weise erhält dieser Mikroprozessor 5 vom A/D-Wandler 7 digitalisierte Signale über einen Bus 21 zugeführt. Im einzelnen handelt es sich dabei um Signale, die von nicht näher veranschaulichten, herkömmlichen Sensoren, Fühlern usw. kommen, und zwar beispielsweise wie folgt:

Signalleitung 22 - Motordrehzahl n

Signalleitung 23 - Fahrgeschwindigkeit v

Signalleitung 24 - Gangkennung G

Signalleitung 25 - Motortemperatur T

Signalleitung 26 - Bremstemperatur

Signalleitung 27 - Kupplungs-Weggeber

Signalleitung 28 - Drosselklappen-Weggeber.

Im Mikroprozessor 5 werden die zugeführten Signale anhand der im ROM 9 abgespeicherten Programme unter Beiziehung der fahrzeugspezifischen bzw. motorspezifischen Kennfelder und Parameter verarbeitet, die im ROM 8 gespeichert sind, wobei die entsprechenden Daten und Programme über einen Bus 29 zum Mikroprozessor 5 übertragen werden. Die im Rechner bzw. Mikroprozessor 5 auf diese Weise ermittelten Ergebnisse werden sodann über einen Bus 30 zum Ausgangskreis 10 übertragen, um über diesen, nach entsprechender Signalverstärkung, was aber in Fig.5 nicht näher veranschaulicht ist, beispielsweise einen Drosselklappensteller (Signalleitung 31), einen Kuppelservomotor oder Pneumatikventile zur Kupplungsbetätigung (Signalleitung 32) bzw. die Gangsteuerung (Signalleitung 33) und gegebenenfalls den bereits erwähnten Fahrpedal-Aktuator 18 (Signalleitung 19) anzusteuern.

In Fig.5 ist schließlich noch der Vollständigkeit halber ganz schematisch eine Signalleitung 34 für Signale von einem Antiblockiersystem (ABS), einer Antriebsschlupfregelung (ASR) bzw. einer Motorschlupfregelung schematisch veranschaulicht, wobei diese Signalleitung 34 zum A/D-Wandler 6 führt.

Die Steuereinheit 4 bzw. deren Rechner 5 ist im vorliegenden Fall nicht nur dafür ausgelegt, in herkömmlicher Weise, anhand der verspeicherten Kennfelder und Parameter, die Ansteuerungen des Getriebes und der Kupplung durchzuführen, sondern auch dazu, je nach dem Weg, d.h. den Bewegungen, des Fahrpedals 13 sowie auf Basis der verspeicherten Kennfelder und Parameter eine Steuerung im Sinne einer Verlagerung des jeweiligen Arbeits- oder Betriebspunktes zum Motor-Bestbereich 1 gemäß Fig.1 hin - bzw. zum Halten dieses Betriebspunktes in diesem Bestbereich 1 - vorzunehmen.

In Fig.6 und 7 ist ferner der dem Fahrpedal 13 zugeordnete Sollwertgeber 14 näher veranschaulicht. In Fig.6 sind dabei die dem Fahrpedal 13 zugeordneten Stellungen im Leerlauf, bei Vollast und Kickdown schematisch mit Geraden bei 35, 36 bzw. 37 veranschaulicht. Ein in Fig.7 ersichtliches Präzisionspotentiometer 38 dient in herkömmlicher Weise zur Erfassung der Fahrpedalstellung und stellt der Elektronik (4 in Fig.5) ein entsprechendes Spannungssignal zur Verfügung. Ein Schaltkontakt 39 in Leerlaufstellung dient zur Überwachung des Potentiometers 38 und ist Teil eines Sicherheitskonzepts. Eine Kickdown-Feder mit Schaltkontakt 40 bewirkt ein erhöhtes Kickdown-Moment am Fahrpedal 13 und stellt der Getriebeelektronik ein Schaltsignal zur Verfügung. Eine Friktionsscheibe 41 dient dazu, zufolge der erzeugten konstanten Reibung die jeweilige Fahrpedalstellung exakt einnehmen und einhalten zu können, ohne daß unerwünschte kleine Schwankungen oder Abweichungen auftreten. Zum exakten Positionieren und Einhalten einer konstanten Fahrpedalstellung ist nämlich eine auf die Pedalkraft abgestimmte Krafthysterese erforderlich. Bei zu kleiner Hysterese ließe sich das Fahrpedal 13 bei den im Fahrzeug vorhandenen Erschütterungen nicht konstant halten. Eine zu große Hysterese würde zu ruckartigen Fahrpedalbewegungen führen. Wie bei den bisherigen Sollwertgebern erzeugt daher die Friktionsscheibe 41 die erforderliche Reibung. Zusammen mit zwei dauerfesten Rückzugfedern 13' für die Fahrpedal-Rückstellung ist so ein über die Lebensdauer konstanter Pedalkraftverlauf gewährleistet.

Zusätzlich ist im gezeigten Ausführungsbeispiel eine weitere Friktionsscheibe 42 mit Rollenfreilauf 43 vorgesehen, wobei dieser zweiten Friktionsscheibe 42 der bereits erwähnte, elektromagnetisch angetriebene Aktuator 18 (vgl. auch Fig.5) zugeordnet ist. Mit Hilfe dieses Aktuators 18 und der Friktionsscheibe 42 kann unter Steuerung durch den Mikroprozessor 5 eine zusätzliche Kraftschwelle oder Hemmschwelle am Fahrpedal 13 erzeugt werden. Der vom Rechner 5 angesteuerte elektromagnetische Aktuator 18 sorgt dabei durch Erzeugung dieser Hemm- bzw. Kraftschwellen für ein Signal zum Fahrer, um diesem die günstigen Betriebspunkte am Fahrpegalweg, abhängig von der momentanen Fahrgeschwindigkeit bzw. Motordrehzahl, anzuzeigen, um so nicht unbedingt erforderliche Rückschaltvorgänge unterdrücken und den Motor im Bereich mit optimalem Wirkungsgrad halten zu können.

Andererseits kann durch die Erzeugung der Kraftschwellen, insbesondere bei jeder von der Nullstellung des Fahrpedals 13 ausgehenden Fahrpedal-Betätigung sowie während der Fahrt im ersten Gang für den Beschleunigungsvorgang, die Wirkungsgradoptimale Motordrehzahl für die Hochschaltvorgänge vorgeschlagen werden. Eine weitere Möglichkeit besteht darin, über diesen Aktuator 18, wenn dieser kurzzeitig wiederholt angesteuert wird, dem Fahrer einen ungünstigen Motorwirkungsgrad nach einem Zurücknehmen des Fahrpedals, und zwar dann, wenn ein Hochschalten möglich wäre, anzuzeigen. Anstatt dieser pulsierenden Anzeige am Fahrpedal 13 könnte jedoch auch eine optische oder akustische Anzeige für den Fahrer vorgesehen werden.

Im Inneren der zusätzlichen Friktionsscheibe 42 ist der Rollenfreilauf 43 vorgesehen, der die durch den Aktuator 18 erzeugten Hemmschwellen am Fahrpedalweg, die jeweils knapp vor bis nach der Auslösung eines Rückschaltvorganges herbeigeführt werden, bei einer Fahrpedalrücknahme unwirksam werden läßt.

Zur weiteren Funktionsverbesserung und Erhöhung des Bedienungskomforts ist zur Übertragung des Moments der zusätzlichen Bremsscheibe 42 auf die Potentiometerwelle 44 des Sollwertgebers 14 eine hochelastische Scheibenkupplung 45, beispielsweise eine Kegelflex-Kupplung nach Kauermann, zwischen dem Freilauf 43 und der Potentiometerwelle 44 angeordnet. Dadurch wird es möglich, die Hemmschwellenkraft am Fahrpedalweg bereits einige mm vor dem Auslösepunkt für einen Rückschaltvorgang beginnen und bis zum Auslösen des Schaltvorganges kontinuierlich ansteigen zu lassen.

Die Steuerung des Motordrehmoments ist so auszulegen, daß der Motor spätestens beim Beginn der Hemmschwelle den optimalen Motorwirkungsgrad erreicht. Nach rund 5° Drehung der Potentiometerwelle 44, noch vor Auslösung des Rückschaltvorganges, wird dann vom Rechner 5 das maximal mögliche Motormoment angesteuert.

Aus der WO-A-89/03319 ergibt sich wie erwähnt bereits, daß mit bestimmten Fahrpedalbewegungen vom Fahrer bewußt Schaltvorgänge vorgesehen bzw. ausgelöst werden können, und eine derartige Überwachung von Fahrpedal-Bewegungsabläufen sowie deren Analyse im Hinblick auf die auszulösenden Schaltvorgänge ist auch bei der vorliegenden Steuerung vorgesehen. Zur Veranschaulichung sind in Fig.8 verschiedene Fahrpedal-Bewegungsabläufe gezeigt, die sich aufgrund der Offenbarung in der genannten WO-A-89/03319 - auf die hiermit bezuggenommen wird - ergeben, so daß hier die Beschreibung kurz gehalten werden kann. Im einzelnen ist in Fig.8 bei 46 veranschaulicht, wie mit einem kurzen Fahrpedal-Ruck über einen Mindest-Fahrpedalweg s, der vom Rechner analysiert wird, ein Rückschaltvorgang (beispielsweise vom 5. Gang auf den 4. Gang) ausgelöst werden kann. Bei 47 ist dann in entsprechender Weise gezeigt, wie ein Hochschaltvorgang, etwa vom 5. Gang auf den 6. Gang, durch eine ruckartige kurze Fahrpedal-Rücknahme vom Fahrer ausgelöst werden kann. Bei 48 und 49 sind weiters zwei Kurven gezeigt, gemäß welchen bei unterschiedlichen Fahrgeschwindigkeiten nach einer vollständigen Fahrpedal-Rücknahme (s = 0) und nachfolgenden neuerlichen Fahrpedal-Betätigung je nach Endstellung des Fahrpedals ein bestimmter Gang festgelegt werden kann.

In Ergänzung zu diesen vorstehenden "Schaltmöglichkeiten" ist bei der vorliegenden Steuerung noch ein korrektiver Eingriff seitens des Rechners zu den jeweiligen Fahrpedal-Betätigungen vorgesehen, um so eine Optimierung hinsichtlich maximales Drehmoment und damit günstigen Motorwirkungsgrad zu erreichen.

So erfolgt die Steuerung des Motordrehmoments nach Gangwechselvorgängen, sobald Motordrehzahl und Fahrpedalweg bestimmte vorgegebene Minimalwerte überschreiten, in einer derartigen Weise, daß während einer Beschleunigungsphase nach jedem Hochschaltvorgang und bei jedem Rückschaltvorgang, der durch eine Fahrpedalbetätigung über eine - durch den Aktuator 18 bewirkte - Fahrpedalhemmschwelle ausgelöst wurde, der Verbrennungsmotor auf das für den optimalen Motorwirkungsgrad notwendige hohe Drehmoment gesteuert wird. Erst nach einer, wenn auch nur geringfügigen, Fahrpedalrücknahme wird das Motormoment dem Rücknahmeweg entsprechend reduziert.

Das Motordrehmoment wird dabei - ausgenommen wenn ASR-Eingriffe vorliegen - nie kleiner als

$$M = M_{max}(S/S_{sp})^a$$

gesteuert, wobei

M      das momentan anzusteuernde Motordrehmoment ist;

$M_{max}$    das derzeit höchstmögliche Drehmoment ist;

S      der augenblickliche Fahrpedalweg ist;

$S_{sp}$    der Fahrpedalweg zur Auslösung eines Rückschaltvorganges ist;

a      eine z.B. vom Getriebegang abhängige Größe, z.B. 0,5-1,5, ist.

Beispielsweise kann a = 1,25 sein, wobei aber je nach Fahrzeug- oder Motortyp auch andere Werte gewählt werden können.

Aufgrund der vorstehend beispielsweise angegebenen Beziehung kann die erforderliche Einspritzmenge in der Elektronik auf an sich übliche Weise berechnet werden.

Das Motordrehmoment wird vor der Auslösung eines Rückschaltvorganges auf die, bei der jeweiligen Drehzahl maximal mögliche Größe gesteuert, wobei der Drehmomentenanstieg entlang des Fahrpedalweges bis zur jeweiligen Hemmschwelle kontinuierlich erfolgt.

Die Motorsteuerung im Leerlauf und im Anfahrbereich erfolgt so, daß für die Pedalnullstellung und kleine Fahrpedalwege frei gewählte Solldrehzahlen eingehalten werden. Mit Minimalbewegungen des Fahrpedals ist es damit möglich, im Schlupfbereich der Kupplung auch ein wandlerartiges Kriechen zu erreichen.

Bei normalen Anfahrvorgängen bestimmt der Fahrer mit dem ersten Ruhepunkt nach einer Fahrpedalnullstellung die Hochschaltdrehzahl für den anschließenden Beschleunigungsvorgang. Mit der Geschwindigkeit der Pedalbewegung kann er gleichzeitig den Momentenanstieg für den unmittelbaren Anfahrvorgang festlegen. Mit einer schnellen Pedalbewegung kann er dabei einen spontanen sportlichen Anfahrvorgang auslösen, oder mit einer langsamen Pedalbewegung, durch die Momentenanstiegsbegrenzung, einen sanften Kupplungsmomentenaufbau erzielen.

Die Motorsteuerung während eines Schaltvorganges erfolgt so, daß bei geöffneter Kupplung der Motor auf die neue Solldrehzahl gesteuert wird. Nach dem Einkuppeln erfolgt im Regelfall der Aufbau des Antriebsmoments auf die für den optimalen Wirkungsgrad notwendige Höhe.

Für die Auslösung von Gangwechselvorgängen wird vorzugsweise folgendes vorgesehen:

Im Falle einer Gangwahl nach einem Roll- oder Bremsvorgang - löst nach jeder Fahrpedalnullstellung, somit auch nach jedem Roll- oder Bremsvorgang - der Fahrer mit der Wahl des ersten Fahrpedalruhepunktes subbewußt einen Gangwechsel zu dem seinem Leistungswunsch entsprechenden Getriebegang aus (vgl. Kurven 48, 49 in Fig.8). Dem Fahrer wird dabei durch die Hemmschwelle am Fahrpedalweg jener Gang im verbrauchsoptimalen Motordrehzahlbereich vorgeschlagen, dessen Hochschaltdrehzahl die obere Grenzdrehzahl des Verbrauchs-Bestbereiches im Motorkennfeld ist.

Diese obere Grenzdrehzahl kann durch die Geschwindigkeit der Fahrpedalbewegung etwas modifiziert werden. Eine schnelle Fahrpedalbewegung bis zur Hemmschwelle erhöht die Hochschaltdrehzahlen und sorgt für einen forcierten Beschleunigungsvorgang im noch sehr guten Verbrauchskennfeld. Eine langsame Bewegung senkt die Hochschaltdrehzahl etwas ab. Der Beschleunigungsvorgang verläuft dann im Drehzahlbereich mit absolut optimalem Wirkungsgrad. Daneben hat der Fahrer natürlich die Möglichkeit, durch eine Fahrpedalstellung vor oder nach der Hemmschwelle jeden gewünschten Drehzahbereich und damit Getriebegang zu wählen.

Automatische Hochschaltvorgänge werden während einer Fahrzeugbeschleunigung und noch 2 Sekunden später beim Überschreiten der, den Fahrpedalstellungen entsprechenden, Drehzahlgrenzen ausgelöst. Der Fahrer kann die Hochschaltdrehzahl während eines Beschleunigungsvorganges durch weiteres Durchtreten des Fahrpedals - dem Zurückweichen der Hemmschwellen für Rückschaltvorgänge folgend - bis zur Motorhöchstdrehzahl anheben, ohne einen nicht gewollten bzw. nicht erforderlichen Rückschaltvorgang auszulösen.

An sich werden durch Zurücknehmen des Fahrpedals keine Hochschaltvorgänge ausgelöst. Der Fahrer kann jedoch mit einem kurzen Rücknahmeruck (wenige mm genügen, vgl. Pos. 47 in Fig.8) unabhängig von der Fahrpedalstellung einen Hochschaltvorgang auslösen, oder er kann durch kurze Rücknahme des Fahrpedals in die Nullstellung und die anschließende Wahl der Fahrpedalstellung (Pos. 48, 49 in Fig.8) subbewußt einen Gangsprung zu dem seinem Leistungswunsch entsprechenden Getriebegang auslösen.

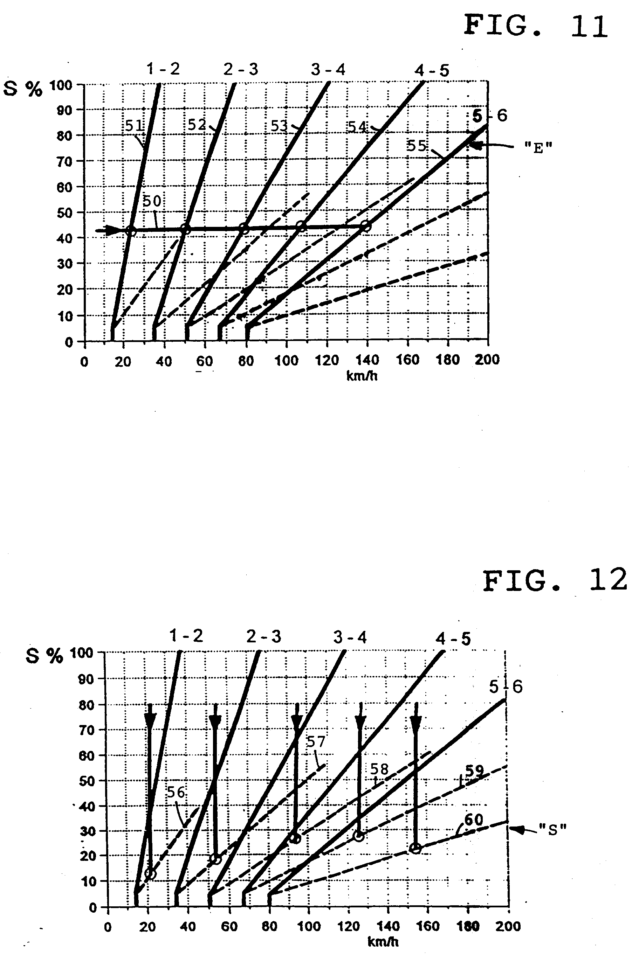

Eine weitere Variante, Hochschaltvorgänge auszulösen, ergibt sich, wenn die Hochschaltpunkte bei Fahrpedalrücknahme gegenüber jenen in Beschleunigungsphasen abgesenkt werden, wie nachfolgend anhand der Fig.11 und 12 erläutert werden wird. Eine Hochschaltung kann dann vom Fahrer auch durch sehr weiteres Zurücknehmen des Fahrpedals ausgelöst werden.

Wird beispielsweise zur Fahrzeugbeschleunigung das Fahrpedal 13 bis zu ungefähr 40 bis 50% seines maximalen Weges betätigt, vgl. Fig.11, mittlere Beschleunigungslinie 50, dann erfolgen die Hochschaltvorgänge im Automatikgetriebe wie üblich an den Hochschaltkennlinien, nämlich den ausgezogenen Kennlinien 51, 52, 53, 54, und 55 in Fig.11. Solange das Fahrpedal 13 nicht zurückgenommen wird, läuft dann der Dieselmotor aufgrund der vorstehend beschriebenen Steuerung während des Beschleunigungsvorganges grundsätzlich immer mit maximalem Drehmoment und damit im Bestbereich des Motorkennfeldes. Wird das Fahrpedal 13 zurückgenommen, so wird das Motormoment entsprechend dem Verlauf der drehzahlspezifischen Kurven sofort reduziert.

Die Steuerungsmöglichkeit gemäß Fig.12 kommt dann zum Tragen, wenn das Fahrpedal 13 bei gleichbleibender oder kleiner werdender Fahrgeschwindigkeit zurückgenommen wird, und wenn zwei Gruppen von Schaltkennlinien, etwa die voll gezeichneten E-Programm-Schaltkennlinien 51 bis 55 gemäß Fig.11 und 12 (E-Economy) sowie die in Fig.11 und 12 gestrichelt gezeichneten S-Programm-Schaltkennlinien 56 bis 60 (S - Sport) vorgesehen sind. Im Fall, daß nun das Fahrpedal 13 bei konstanter oder kleiner werdender Fahrgeschwindigkeit zurückgenommen wird (s. die vertikalen Linien in Fig.12), wird durch die Steuerung 4 (Fig.5) das Getriebe automatisch auf die Schaltkennlinien 56 bis 60 des S-Programms umgeschaltet, wobei diese Kennlinien 56 bis 60 im Diagramm wesentlich tiefer liegen als jene, die bei steigender Drehzahl beim Beschleunigen die Hochschaltungen auslösen, also die Kennlinien 51 bis 55, wie vorstehend bereits anhand der Fig.11 dargelegt wurde. Für den Fahrer erübrigt es sich somit, laufend händisch zwischen E-Programm und S-Programm umschalten zu müssen. Die Hochschaltkennlinien 51 bis 55 bzw. 56 bis 60 können darüber hinaus, wie an sich bei heutigen Automatikgetrieben bereits üblich, beispielsweise einer Adaptivierung entsprechend dem Fahrertyp, verschiedenen Fahrsituationen sowie der Umwelterkennung zusätzlich unterworfen werden.

Ein ungünstiger Motorwirkungsgrad (durch kleine Leistungsanforderungern in einem niederen Gang), z.B. nach einem Zurücknehmen des Fahrpedals, wird beispielsweise optisch, akustisch und/oder vorzugsweise durch Pulsieren des Fahrpedals 13 (letzteres eventuell etwas zeitverzögert) angezeigt. Das Signal unterbleibt und jeder Hochschaltvorgang wird unterdrückt, wenn im höheren Gang die von Parametern, z.B. Motortemperatur und Getriebegang, abhängige Mindestdrehzahl unterschritten würde, sowie nach einem Rückschaltvorgang, der durch eine kurze Drucksteigerung auf das Fahrpedal 13 (Pos. 46 in Fig.8) ausgelöst wurde. Wenn kurzfristig keine Leistungserhöhung erforderlich ist, wird der Fahrer praktisch subbewußt (mit einem Rücknahmeruck) auf das taktile Signal reagieren und damit einem Hochschaltvorgang, oder durch Rücknahme des Fahrpedals in die Nullage den Leerlauf auslösen. Nach einiger Gewöhnung wird der Fahrer bereits vor dem Pulsieren des Fahrpedals 13 reagieren. Das Ausbleiben derartiger haptischer Signale bestätigt dann eine kontinuierlich verbrauchsoptimale Fahrweise.

Wird während eines Beschleunigungsvorganges eine gewählte Tempomat-Sollgeschwindigkeit erreicht, erfolgt automatisch ein Gangsprung zu dem, dem errechneten Leistungsbedarf entsprechenden Overdrivegang.

Rückschaltvorgänge werden, sobald durch eine Betätigung des Fahrpedals 13 die Rückschaltline überschritten wird, automatisch ausgelöst. Dem Fahrer wird jedoch durch eine Hemmschwelle am Fahrpedalweg die Auslösung vorher angezeigt.

Zusätzlich kann der Fahrer auch bei niederem Leistungsbedarf (und kleinem Fahrpedalweg) durch einen kurzen Druck auf das Fahrpedal (wenige mm genügen) Rückschaltvorgänge präventiv auslösen. Beim späteren Gasgeben entfällt dann der Zeitverlust für einen Schaltvorgang und das Auftouren des Motors.

Was Rückschaltvorgänge bei Talfahrten betrifft, so erkennt der Rechner an einer Geschwindigkeitserhöhung im Schubbetrieb eine Bergfahrt. Wenn dann ein bestimmter Bremsdruck die Geschwindigkeit nicht reduziert, wird ein Rückschaltvorgang, und bei hohem Bremsdruck ein Gangsprung, ausgelöst. Der Fahrer kann allerdings auch während einer Bremspedalbetätigung jederzeit von sich aus, beispielsweise bereits vor einem großen Gefälle präventiv, durch kurze Pedaldrucksteigerungen Rückschaltvorgänge auslösen.

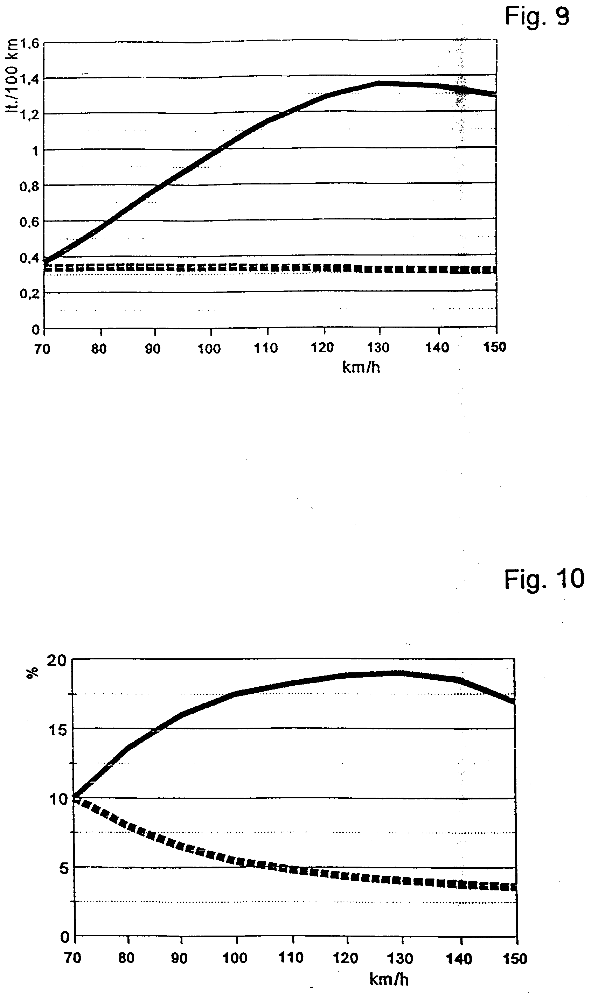

Mit der vorliegenden Antriebsstrang-Steuerung und der Erzeugung einer Hemmschwelle am Fahrpedalweg noch vor dem Auslösepunkt für einen Rückschaltvorgang werden wie erwähnt somit vor allem unbeabsichtigte Rückschaltungen vermieden, und der Motor wird bereits bei einer Fahrpedalstellung noch vor dieser Hemmschwelle auf das maximale Drehmoment gesteuert. Dabei wird eine beträchtliche Verbrauchsreduktion erzielt, wie sie aus den Diagrammen der Fig.9 und 10 ersichtlich ist. Hierbei ist in Fig.9 die Verbrauchsreduktion um l/100 km und in Fig.10 in Prozentangaben dargestellt, und zwar einerseits mit einer vollen Linie für die vorliegende Antriebsstrang-Steuerung und zu Vergleichszwecken mit gestrichelter Linie für den Fall einer Fahrzeuggewichtsreduktion, etwa zufolge einer Aluminium-Leichbauweise mit einer Gewichtsreduktion von 250 kg. Es ist dabei ersichtlich, daß vor allem in den für den Überland- bzw. Autobahnverkehr wichtigen Geschwindigkeitsbereichen von 100 bis 130 km/h bei einem Vergleich zur Verbrauchseinsparung zufolge Gewichtsreduktion eine drei- bis viermal größere Kraftstoffersparnis erzielt wird.

Insgesamt kann somit festgehalten werden, daß die vorliegende Antriebsstrang-Steuerung Kraftstoff spart, die Fahrzeugbedienung vereinfacht und die Freude am Fahren erhöht. Während der Fahrt erfolgt jede Bewegungskorrektur des Fahrzeuges in der Längsrichtung ausschließlich mit subbewußten Bedienungen von Fahr- und Bremspedal. Statt sechs oder sieben Schaltknüppelstellungen konventioneller Automatikgetriebe genügen drei Stellungen: Vorwärtsfahrt, Parken und Rückwärtsfahrt. Auch die Bedienung von Programmwahltasten für die üblichen zwei oder drei Fahrprogramme entfällt.

Die Steuerung wird vorzugsweise so vorgesehen, daß bei der Rücknahme des Fahrpedals in der Nullstellung automatisch ausgekuppelt wird. Wenn durch eine Gefällstrecke eine Beschleunigung eintreten würde, sowie bei jeder Bremspedalbetätigung über einer Mindestgeschwindigkeit und einer Mindestmotordrehzahl wird das Auskuppeln unterdrückt und die Schubabschaltung wirksam. Nach einer Freigabe des Bremspedals wird jedoch wieder ausgekuppelt, um auf Gefällstrecken eine Fahrzeugbeschleunigung auch ohne Motorleistung zu ermöglichen.

Rückschaltvorgänge werden, wie bei den konventionellen Automatikgetrieben, sobald durch eine Betätigung des Fahrpedals die Rückschaltlinie überschritten wird, automatisch ausgelöst. Dem Fahrer wird jedoch durch eine Hemmschwelle am Fahrpedalweg die bevorstehende Auslösung eines Rückschaltvorganges angezeigt.

Zusätzlich kann der engagierte Fahrer, so wie er es beim Handschaltgetriebe gewohnt war, beispielsweise bereits vor Beginn eines Überholmanövers oder bei Bergfahrt vor Kehren präventiv, bei noch geringem Leistungsbedarf, einen Rückschaltvorgang auslösen ("Power schalten"). Dazu genügt ein kurzer Druck auf das Fahrpedal (wenige mm genügen, s. Pos. 46 in Fig.8). Beim späteren Gasgeben wird dann der Zeitverlust für Schaltvorgang und Auftouren des Motors vermieden.

Hochschaltvorgänge werden während einer Fahrzeugbeschleunigung und ca. 2 Sekunden danach, bei den konventionellen Automatikgetrieben, sobald die Motordrehzahl die der Fahrpedalstellung entsprechende Hochschaltdrehzahl auf der Hochschaltlinie 51 bis 55 für Fahrzeugbeschleunigungen (s. Fig.11) übersteigt, automatisch ausgelöst. Der Fahrer hat die Möglichkeit, die Hochschaltdrehzahl während einer Fahrzeugbeschleunigung, durch Bewegen des Fahrpedals, dem Zurückweichen der Hemmschwelle für Rückschaltungen folgend, bis zur Motorhöchstdrehzahl anzuheben, ohne Rückschaltvorgänge auszulösen.

Der Fahrer hat weiters die Möglichkeit, mit einem kurzen Fahrpedal-Rücknahmeruck (wenige mm genügen, s. Pos.47 in Fig.8), einen Hochschaltvorgang auszulösen. Weitere Möglichkeiten Hochschaltvorgänge auszulösen, ergeben die weit abgesenkten Hochschaltlinien 56 bis 60 (Fig.12), die bei gleichbleibender oder sinkender Fahrgeschwindigkeit wirksam sind.

Nach Rückschaltung durch Überwinden der Hemmschwelle, oder Hochschaltvorgängen während einer Fahrzeugbeschleunigung, wird das Motordrehmoment immer im Bestbereich des Motorkennfeldes (bei Dieselmotoren fast Vollast) gehalten. Erst bei und nach einer Fahrpedalrücknahmebewegung nach einem Gangwechselvorgang wird das Motordrehmoment proportional zum Rücknahmeweg reduziert.

Hat das Fahrzeug nach einem Roll- oder Bremsvorgang eine bestimmte Geschwindigkeit, so wird mit dem ersten Fahrpedal-Ruhepunkt nach der Pedalnullstellung (vgl. Kurven 48, 49 in Fig.8) jener Gang angesteuert, dessen Motordrehzahl dem durch den Pedalruhepunkt gewählten Drehzahl- und Leistungsbereich entspricht. Mit einer Fahrpedalbewegung nach einer Pedalnullstellung löst der Fahrer also subbewußt einen Gangwechsel zu dem seinem Leistungswunsch entsprechenden Getriebegang aus. Dabei wird dem Fahrer wieder durch eine Hemmschwelle am Fahrpedalweg s der Drehzahlbereich mit der verbrauchsoptimalen Hochschaltgrenze vorgeschlagen. Der Motor wird anschließend, solange keine Fahrpedalrücknahmebewegung erfolgt, von der Steuerung 4 immer auf die - für die jeweiligen Motordrehzahlen - verbrauchsoptimalen Motordrehmomente gesteuert.

Ferner wird eine Geschwindigkeitserhöhung im Schubbetrieb als Bergabfahrt erkannt. Hochschaltungen werden dann unterdrückt und wenn notwendig (wenn höherer Bremspedaldruck die Geschwindigkeit nicht reduziert) werden Rückschaltvorgänge ausgelöst. Zusätzlich kann der Fahrer jederzeit von sich aus, beispielsweise vor einem großen Gefälle, während einer normalen Bremsbetätigung durch eine kurze Pedaldruckerhöhung Rückschaltvorgänge präventiv auslösen.

Nachfolgend soll anhand der Flußdiagramme von Fig.13 bis 15 der Steuerungsablauf sowie die spezielle Form der Drehmoment-Ansteuerung noch mehr im Detail erläutert werden.

Im einzelnen kann der Ablauf der Ansteuerung des Drehmoments M gemäß dem Flußdiagramm von Fig.13 wie folgt sein.

Nach dem Start bei 100 werden im Block 101 ein Software-Schalter K, der Pedalweg $S_o$ und das Motormoment $M_1$ gleich Null gesetzt. In 102 erfolgt eine Abfrage, ob der Pedalweg S größer als Null ist, Wenn ja, wird in 103 noch aus Sicherheitgründen der Leerlaufkontakt 39 (Fig.5) des Fahrpedals 13 überprüft, d.h. abgefragt, ob S1 > 0 ist. Wenn das Fahrpedal 13 nicht in der Leerlaufstellung ist, erfolgt dann in 104 die Abfrage, ob der erste Gang eingelegt ist (G = 1 ?). Wenn nein, wird in 105 abgefragt, ob der aus Sicherheitsgründen vorgesehene Software-Schalter K = 0 ist. Wenn ja, wird in 106 überprüft, ob der derzeitige Wert für den Pedalweg S gleich dem oder größer als der Wert $S_o$ ist. Wenn ja, wird in 107 der Wert $S_o$ gleich S gestellt, und in 108 wird dann noch überprüft, ob die Motordrehzahl D größer oder gleich einer Mindestdrehzahl $D_1$ ist. Wenn ja, wird dann in 109 das für die augenblickliche Motordrehzahl D wirkungsgradoptimale Motordrehmoment $M_1$ aus dem Motorkennfeld bestimmt und anschließend in 113 das Motormoment M aus dem Pedalweg berechnet. In 115 wird abgefragt, ob $M_1$ gleich Null ist, und wenn nein, wird in 116 abgefragt, ob M größer als $M_1$ ist. Wenn nein, wird in 117 M gleich $M_1$ gesetzt.

In 110 erfolgt eine Abfrage, ob der Getriebegang G gewechselt wurde. Wenn nein, wird in 111 noch vor der Ausgabe des Wertes für das Motordrehmoment M in 118 und dem Rücksprung zum Block 102 $S_o$ gleich S, $G_o$ gleich G und K und $M_1$ gleich Null gesetzt.

Ergibt in 104 die Gangabfrage, daß der erste Gang eingelegt ist, so wird, da ja im ersten Gang keine Rückschaltpunkte $S_{sp}$ am Fahrpedalweg S vorhanden sind, der halbe maximale Fahrpedalweg in 112 als $S_{sp}$ definiert und anschließend das anzusteuernde Motordrehmoment in 113 errechnet. Wenn in 105 oder in 106 die Abfrage nein ergibt, wird in 114 K = 1 gesetzt und das Motormoment in 113 in gleicher Weise errechnet.

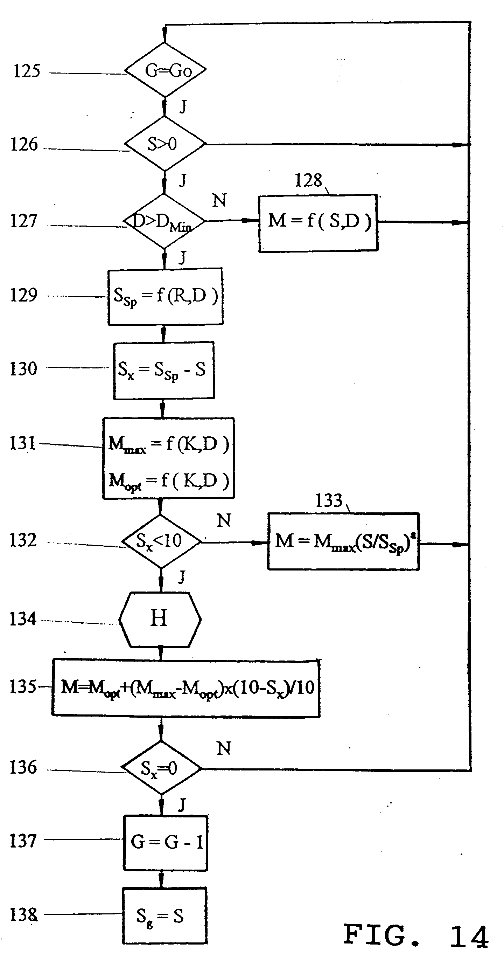

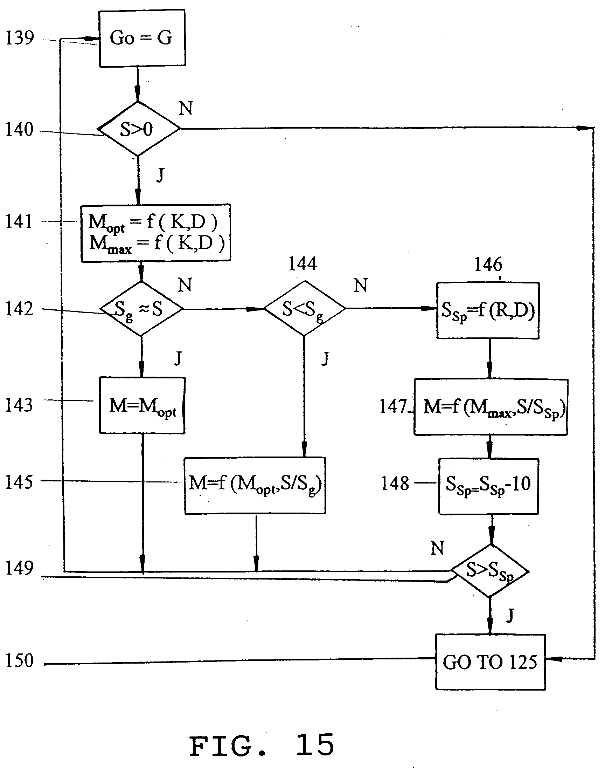

Anhand der Fig.14 und 15 sollen schließlich nach die Hemmschwellensteuerung und die Steuerung des Motordrehmoments vor und nach einem Rückschaltvorgang erläutert werden. Die Flußdiagramme gemäß Fig.14 und 15 folgen dabei aufeinander, und im übrigen werden alle Programme, nach Fig.13 ebenso wie nach Fig.14 und 15 sowie auch jene nach der WO-A-89/03319 (vgl. auch Fig.8 - vorausschauende Auslösung von Schaltvorgängen).

Gemäß Fig.14 erfolgt bei 125 die Abfrage, ob weiter derselbe Gang eingelegt ist ( G = Go ). Wenn ja, wird in 126 abgefragt, ob der Pedalweg S größer als Null ist. Wenn ja, dann wird in 127 abgefragt, ob die Motordrehzahl D größer als eine Mindestdrehzahl $D_{Min}$ ist. Wenn nein, dann wird in 128 das Motordrehmoment M als Funktion des Fahrpedalweges S und der Motordrehzahl D bestimmt und zum Schritt 125 zurückgekehrt. Wenn ja, dann wird in 129 der Fahrpedalweg $S_{Sp}$ für den Rückschaltpunkt als Schnittpunkt der Rückschaltlinie mit der gegenwärtigen Motor- bzw. Getriebeausgangsdrehzahl bestimmt und anschließend in 130 der Fahrpedalweg $S_x$ bis zum Rückschaltpunkt berechnet.

Sodann werden in 131 aus dem Motorkennfeld für die derzeitige Motordrehzahl das maximal mögliche Motordrehmoment $M_{max}$ sowie das verbrauchsoptimale Drehmoment $M_{opt}$ bestimmt.

In 132 erfolgt die Abfrage, ob der Fahrpedalweg $S_x$ bis zum nächsten Rückschaltpunkt kleiner als 10 mm ist. Wenn nein, dann wird das Motordrehmoment M in 133 errechnet (vgl. auch Fig.13). Wenn ja, dann wird in 134 der Aktuator für die Hemmschwelle H angesteuert. In 135 wird so dann das Motordrehmoment z.B. gemäß

$$M = M_{opt} + (M_{max} - M_{opt}) \cdot (10 - S_x)/10$$

errechnet, wobei dieses Motordrehmoment M bei kleiner werdenden $S_x$ bis zum maximal möglichen Drehmoment ansteigt.

Ist in 136 $S_x = 0$, dann wird in 137 die Ansteuerung des Rückschaltvorganges ausgelöst und die Hemmschwelle deaktiviert. In 138 wird der Fahrpedalweg S bei der Auslösung des Gangwechsels als $S_g$ festgehalten.

Das Programm geht dann über zu Schritt 139, Fig.15.

Gemäß Fig.15 wird sodann im Schritt 139 der derzeit eingelegte Gang als Go festgehalten. Die Abfrage 140 prüft, ob der Fahrpedalweg größer als 0 ist. Wenn ja, werden in 141 das verbrauchsoptimale und das maximal mögliche Motordrehmoment definiert. In 142 wird sodann geprüft, ob die Fahrpedalstellung S annähernd dem Gangwechsel-Fahrpedalweg $S_g$ (s. Fig.14) entspricht. Wenn ja, wird der Motor in Schritt 143 auf das verbrauchsoptimale Drehmoment gesteuert ($M = M_{opt}$). Wenn nein, so wird in 144 abgefragt, ob der derzeitige Fahrpedalweg S kleiner als $S_g$ ist. Wenn ja, so wird in 145 das Motordrehmoment M definiert.

Wenn bei der Abfrage 144 der Fahrpedalweg S größer als $S_g$ ist, wird in 146 der derzeitige Fahrpedalweg $S_{sp}$ für die Auslösung eines Rückschaltvorganges bestimmt. In 147 wird das anzusteuernde Motordrehmoment M festgelegt. In 148 wird der Weg $S_{sp}$ um 10 mm reduziert, um den Auslösepunkt für die Hemmschwelle festzulegen. In der folgenden Abfrage 149 wird dann geprüft, ob der Fahrpedalweg S größer als $S_{sp}$ ist. Wenn nein, erfolgt ein Sprung nach Schritt 139; wenn ja, erfolgt jedoch ein Sprung zum Schritt 125 in Fig.14.

Aus den vorstehenden Ausführungen ergibt sich, daß bei der vorliegenden Steuerung auf dem weitaus größten Teil des Fahrpedalweges der Motor vom Rechner (Steuerung 4 bzw. Mikroprozessor 5 in Fig.5) abhängig von aus Sensorwerten errechneten Parametern, auf ein sehr hohes Drehmoment und damit auf einen optimalen Wirkungsgrad gesteuert wird.

Um auch bei Konstantfahrt im mittleren und niederen Geschwindigkeitsbereich den Motor im Bestbereich gemäß Fig.1 zu halten, könnte ein sehr großer Oberdrivebereich, eventuell mit zwei Oberdrivegängen, vorgesehen werden. Dabei ist es aber entscheidend, die Schalthäufigkeit in Grenzen zu halten. Wie bereits vorstehend erwähnt werden daher zur Vermeidung der unnötigen bzw. vom Fahrer ungewollten Rückschaltvorgänge in diesen Fällen die elektronisch gesteuerten Hemmschwellen am Fahrpedalweg - mit Hilfe des Aktuators 18 - jeweils vor Überschreiten eines Rückschaltpunktes aufgebaut. Dadurch ist es dem Fahrer möglich, nicht unbedingt erforderliche Rückschaltvorgänge zu unterdrücken, um den Motor im Bestbereich Fig.1 arbeiten zu lassen. Diese Hemmschwellen werden wie erwähnt mit der zusätzlichen Friktionsscheibe 42 erzeugt, wobei durch den Freilauf 43 sichergestellt, daß bei einer Fahrpedal-Rücknahme die Friktionsscheibe 42 bzw. das erzeugte große Reibungsmoment nicht wirksam wird, so daß die Fahrpedalrücknahme ohne weiteres möglich ist.

Weiters kann mit Hilfe des Aktuators 18 und der zusätzlichen Friktionsscheibe 42 auch bei jeder Betätigung des Fahrpedals 13, die von der Nullstellung ausgeht, sowie während des Fahrbetriebs im ersten Gang eine Druckschwelle am Fahrpedalweg vorgesehen werden, und zwar für den Beschleunigungsvorgang bei den wirkungsgradoptimalen Hochschaltdrehzahlen, um so dem Fahrer über diese Fahrpedalpositionen die jeweilige optimale Motordrehzahl für das Hochschalten vorzuschlagen.

Bei dieser für den Fahrer unterbewußten Vernetzung der Entscheidungsfindung zwischen Fahrer und Rechner für die Auslösung von Gangwechselvorgängen werden alle exakt über Sensoren und Kennfelder für den Rechner verfügbaren Einflußgrößen, aber auch die nur dem Fahrer mögliche Voraussicht berücksichtigt.

## Patentansprüche

1. Verfahren zur Steuerung eines Antriebsstranges eines Kraftfahrzeuges mit einem Verbrennungsmotor, mit einem Automatikgetriebe, z.B. einem automatischen Schaltgetriebe mit elektronisch gesteuerter mechanischer Trockenkupplung, und mit einem Fahrpedal (13), dem ein Sollwertgeber zugeordnet ist, bei welchem Verfahren

   - Fahrpedalbewegungsabläufe überwacht und mit Hilfe eines Rechners (4) bezüglich Motorleistungssteuerung und Schaltvorgänge analysiert werden,
   - Schaltvorgänge aufgrund von abgespeicherten Motorkennfeldern und Schaltkennlinien sowie von mittels Sensoren erfaßten Betriebsparametern ausgelöst werden, und
   - am Fahrpedalweg (s) mit Hilfe des Rechners (4) Kraftschwellen (H) selektiv erzeugt werden, um Anzeigen für den Fahrer im Hinblick auf eine Verbrauchsoptimierung zu erzielen, dadurch gekennzeichnet, daß
   - der Verbrennungsmotor mit Hilfe des Rechners (4) jeweils vor Erreichen eines Rückschaltvorganges bzw. einer Kraftschwelle am Fahrpedalweg korrektiv zur Fahrpedalstellung (S) auf das bei der jeweiligen Motordrehzahl (D) maximal mögliche Motordrehmoment ($M_{max}$) gesteuert wird,
   - wobei der vom Rechner (4) korrektiv bewirkte Drehmomentanstieg entlang des Fahrpedalweges (S) bis zum jeweiligen Rückschaltpunkt bzw. bis zur jeweiligen Kraftschwelle (H) kontinuierlich erfolgt.

2. Verfahren nach Anspruch 1, dadurch gekennzeichnet, daß der Verbrennungsmotor nach jedem durch Überwinden einer Kraftschwelle am Fahrpedalweg ausgelösten Rückschaltvorgang, nach jedem Hochschaltvorgang während eines Beschleunigungsvorganges sowie beim ersten Fahrpedalruhepunkt nach einer Pedalnullstellung mit Hilfe des Rechners, wenn eine vorgegebene Mindest-Fahrgeschwindigkeit, z.B. 16 km/h, überschritten ist, korrektiv zur Fahrpedalstellung vorerst auf ein verbrauchsoptimales Drehmoment ($M_{opt}$) gesteuert wird, welches erst bei einer nachfolgenden Pedalrücknahme in Entsprechung zum Rücknahmeweg verringert wird, welches jedoch bei einem weiteren Durchtreten des Fahrpedals bis zum nächsten Rückschaltpunkt bzw. bis zur Kraftschwelle am Fahrpedalweg auf das maximal mögliche Drehmoment ($M_{max}$) erhöht wird.

3. Verfahren nach Anspruch 1 oder 2, dadurch gekennzeichnet, daß das Drehmoment des Verbrennungsmotors entlang des Fahrpedals, abgesehen von einem etwaigen Antriebsschlupfregelungs-Eingriff, immer zumindest auf einen Wert gemäß der Beziehung

$$M = M_{max} \, (S/S_{sp})^{a}$$

gesteuert wird, wobei

M      das momentan anzusteuernde Motordrehmoment ist;
$M_{max}$      das im jeweiligen Zeitpunkt höchstmögliche Drehmoment ist;
S      der im jeweiligen Zeitpunkt gegebene Fahrpedalweg ist;
$S_{sp}$      der jeweilige Fahrpedalweg zur Auslösung eines Rückschalt-Vorganges ist; und
a      eine vorgegebene, z.B. vom jeweiligen Getriebegang abhängige Größe ist und beispielsweise 0,5-1,5, vorzugsweise 1,25, beträgt.

4. Verfahren nach einem der Ansprüche 1 bis 3, dadurch gekennzeichnet, daß automatische Hochschaltungen in der Zeit während und 1-2 Sekunden nach Beschleunigungsvorgängen gemäß Hochschaltlinien, die Economy-Schaltlinien entsprechen, ausgelöst werden, dagegen Hochschaltungen bei gleichbleibender oder sinkender Fahrgeschwindigkeit, bei einer Fahrpedalrücknahme, durch selbsttätiges Umschalten nach Hochschaltlinien ausgelöst werden, die tiefer liegen als die Economy-Schaltlinien.

5. Verfahren nach einem der Ansprüche 1 bis 4, dadurch gekennzeichnet, daß Hochschaltungen bei gleichbleibender oder fallender Fahrgeschwindigkeit, während Fahrzeug-Querbeschleunigungen, die beispielsweise aus den Raddrehzahlinformationen eines Antiblockiersystem-Steuergerätes errechnet werden, und bei einer Bergfahrt, die aus Parametern errechnet wird, oder bei erhöhten Fahrwiderständen unterdrückt werden.

6. Verfahren nach einem der Ansprüche 1 bis 5, dadurch gekennzeichnet, daß Hochschaltungen ein bestimmtes Zeitintervall nach durch einen kurzen Druck auf das Fahrpedal ausgelösten Rückschaltvorgängen unterdrückt werden, solange keine wesentliche Drehzahlsteigerung oder eine Fahrpedalnullstellung erfolgt.

7. Verfahren nach einem der Ansprüche 1 bis 6, dadurch gekennzeichnet, daß zum Halten des Verbrennungsmotors im Bereich mit hohem Drehmoment bzw. hohem Wirkungsgrad mit Hilfe des Rechners jeweils Kraftschwellen als Hemmschwellen selektiv am Fahrpedalweg generiert werden.

8. Verfahren nach Anspruch 7, dadurch gekennzeichnet, daß bei jeder von der Nullstellung des Fahrpedals ausgehenden Pedalbewegung, beim Anfahrvorgang und während der Fahrt, durch eine Hemmschwelle am Fahrpedalweg jene Fahrpedalstellung für die Hochschaltdrehzahl angezeigt wird, die den folgenden Beschleunigungsvorgang im wirkungsgradoptimalen Motordrehzahlbereich hält.

9. Verfahren nach Anspruch 7 oder 8, dadurch gekennzeichnet, daß durch die Generierung von Hemmschwellen am Fahrpedalweg, an den von den Rückschaltelinien und der Fahrgeschwindigkeit bzw. der Motor-Drehzahl abhängigen Auslösepunkten für Rückschaltvorgänge, dem Fahrer nicht unbedingt erforderliche Rückschaltvorgänge signalisiert werden, um den Verbrennungsmotor während der Beschleunigungsphasen durch die Stellung des Fahrpedals an der Hemmschwelle im optimalen Wirkungsgradbereich zu halten.

10. Verfahren nach einem der Ansprüche 7 bis 9, dadurch gekennzeichnet, daß die Hemmschwellen mit einer im Fahrpedal-Sollwertgeber vorgesehenen Friktionsscheibe (42) durch einen elektromagnetischen Aktuator erzeugt werden, wobei bei Ansteuerung des Aktuators (18) durch den Rechner (4) ein erhöhtes Reibungsmoment an der Friktionsscheibe erzeugt wird.

11. Verfahren nach Anspruch 10, dadurch gekennzeichnet, daß die Friktionsscheibe (42) für die Hemmschwellen auf einem bei der Fahrpedalrücknahme wirksamen Freilauf (43) angeordnet wird.

12. Verfahren nach Anspruch 10 oder 11, dadurch gekennzeichnet, daß im Sollwertgeber zur Übertragung des Reibungsmoments der Friktionsscheibe (42) auf die Sollwertgeber-Welle (44) eine elastische Scheibenkupplung (45) angeordnet und die Hemmschwellenkraft am Fahrpedalweg (S) bereits einige mm, z.B. 3 bis 5 mm, vor dem Auslösepunkt für einen Rückschaltvorgang im Rechner (4) festgelegt wird und bis zum Auslösen des Schaltvorganges kontinuierlich ansteigt, wobei gleichzeitig durch die Drehung der Sollwertgeber-Welle das Motordrehmoment vom verbrauchsoptimalen Drehmoment ($M_{opt}$) bis zum maximal möglichen Drehmoment ($M_{max}$) gesteigert wird.

13. Verfahren nach einem der Ansprüche 1 bis 12, dadurch gekennzeichnet, daß mit Hilfe des Rechners (4) die automatisierte Kupplung bei einer Fahrpedalnullstellung ausgekuppelt wird, ausgenommen jedoch, wenn eine Fahrzeugbeschleunigung eintritt bzw. aus Parametern vorausberechnet auftreten wird sowie bei Betätigung des Bremspedals, wobei jedoch sofort nach einer Bremspedalfreigabe wieder ausgekuppelt wird.

## Claims

1. A method of controlling a drive train of a motor vehicle equipped with an internal combustion engine, an automatic transmission, e.g. an automatic gear shifting mechanism with an electronically controlled mechanical dry clutch, and an accelerator pedal (13) with an associated set value transmitter, in which method

    - accelerator pedal motion sequences are monitored and analysed as regards engine power control and gear shifting procedures by aid of a computer (4),
    - gear shifting procedures are triggered on the basis of stored engine characteristics and gear shifting characteristics as well as on the basis of operational parameters detected by sensors, and
    - force thresholds (H) are selectively produced along the accelerator pedal path (S) by aid of the computer (4) so as to obtain indications for the driver with a view to consumption optimization, characterised in that
    - before a downshifting procedure or a force threshold on the accelerator pedal path, respectively, is reached, the internal combustion engine is driven under the control of the computer (4), correctingly to the accelerator pedal position (S), to the maximum engine torque ($M_{max}$) possible at the respective number of engine revolutions (D),
    - the torque increase correctingly caused by the computer (4) occurring continuously along the accelerator pedal path (S) as far as to the respective downshifting point or as far as to the respective force threshold (H), respectively.

2. A method according to claim 1, characterised in that after each downshifting procedure triggered by overcoming a force threshold on the accelerator pedal path, after each upshifting procedure during an accelerating procedure, as well as at the first accelerator pedal rest point after a pedal zero positioning, if a pre-determined minimum driving speed, e.g. 16 km/h, is exceeded, the internal combustion engine at first is driven to a comsumption-optimum torque ($M_{opt}$) by aid of the computer, correctingly to the accelerator pedal position, which torque is reduced only after a subsequent pedal release corresponding to the pedal release path, which torque, however, at a further stepping on the accelerator pedal as far as to the next downshifting point or as far as to the force threshold on the accelerator pedal path, respectively, will be increased to the maximum torque ($M_{max}$) possible.

3. A method according to claim 1 or 2, characterized in that apart from a possible drive slip control intervention, the torque of the internal combustion engine along the accelerator pedal path will always be directed at least to a value corresponding to the relationship

$$M = M_{max} \, (S/S_{sp})^{a},$$

wherein

| | |
|---|---|
| $M$ | is the engine torque to be approached at at the present moment; |
| $M_{max}$ | is the highest torque possible at that respective moment; |
| $S$ | is the accelerator pedal path at that respective moment, |
| $S_{sp}$ | is the respective accelerator pedal path for triggering a downshifting procedure; and |
| $a$ | is a given parameter depending, e.g., on the respective gear shifted, and amounting to, e.g., 0.5-1.5, preferably amounting to 1.25. |

4. A method according to any one of claims 1 to 3, characterised in that during and 1-2 seconds after accelerating procedures, automatic upshiftings are triggered in accordance with upshifting characteristics corresponding to economy shifting characteristics, whereas at constant or decreasing driving speeds, in case of an accelerator pedal release, upshiftings are triggered according to upshifting characteristics that are lower than the economy shifting characteristics by automatic switching over.

5. A method according to any one of claims 1 to 4, characterised in that upshiftings at constant or decreasing driving speeds, during transverse accelerations of the vehicle as calculated, e.g., on the basis of information on the number of wheel revolutions provided by an anti-block system control device, and during uphill driving calculated from parameters, or at increased driving resistances are suppressed.

6. A method according to any one of claims 1 to 5, characterised in that upshiftings are suppressed for a certain time interval after downshifting procedures that have been triggered by a short pressure on the accelerator pedal, as long as there is no substantial increase in the number of revolutions or a zero positioning of the accelerator pedal.

7. A method according to any one of claims 1 to 6, characterised in that by aid of the computer force thresholds are selectively generated along the accelerator pedal path as inhibiting thresholds so as to keep the internal combustion engine in the range of high torque or high degree of effectiveness, respectively.

8. A method according to claim 7, characterised in that at each pedal movement departing from the zero position of the accelerator pedal, at the process of starting and during driving, by an inhibiting threshold on the accelerator pedal path that accelerator pedal position is indicated for the upshifting number of revolutions which will keep the subsequent accelerating procedure within the optimally effective range of number of engine revolutions.

9. A method according to claim 7 or 8, characterised in that by generating inhibiting thresholds on the accelerator pedal path, at the triggering points for downshifting procedures which depend on the downshifting characteristics and on the driving speed or on the number of engine revolutions, respectively, downshifting procedures not necessarily required are signalled to the driver so as to keep the internal combustion engine in the range of optimum effectiveness during the accelerating phases by positioning the accelerator pedal at the inhibiting threshold.

10. A method according to any one of claims 7 to 9, characterised in that the inhibiting thresholds are produced with a friction disk (42) provided in the set value transmitter of the accelerator pedal by means of an electromagnetic actuator, an increased moment of friction being generated on the friction disk if the actuator (18) is operated by the computer (4).

11. A method according to claim 10, characterised in that the friction disk (42) for the inhibiting thresholds is arranged on a freewheeling device (43) effective during an accelerator pedal release.

12. A method according to claim 10 or 11, characterised in that for transmitting the moment of friction of the friction disk (42) to the set-value transmitter shaft (44), an elastic disk coupling (45) is arranged in the set-value transmitter, and that the inhibiting threshold force on the accelerator pedal path (S) is set in the computer (4) already a few mm, e.g. 3 to 5 mm, in front of the triggering point for a downshifting procedure and increases continuously until triggering of the shifting procedure, the engine torque simultaneously being increased from the consumption-optimal torque ($M_{opt}$) to the maximum torque possible ($M_{max}$) by the rotation of the set-value transmitter shaft.

13. A method according to any one of claims 1 to 12, characterised in that the automated clutch is disengaged by aid of the computer (4) at each zero position of the accelerator pedal, except in case an acceleration of the vehicle occurs or will occur as pre-calculated from parameters , as well as in case of actuation of the braking pedal, disengagement of the clutch, however, being effected immediately after release of the braking pedal.

**Revendications**

1. Procédé de commande d'une barre d'entraînement d'un véhicule automobile équipé d'un moteur à combustion interne, d'une boîte de vitesses automatique, par exemple d'une boîte de vitesses automatique avec embrayage mécanique sec commandé par électronique, et d'une pédale d'accélérateur (13), auquel est associé un ajusteur de valeur de consigne, dans lequel

   - les séquences de mouvement de la pédale d'accélérateur sont surveillés et analysés au moyen d'un ordinateur (4) pour ce qui concerne la commande de puissance du moteur et les opérations de changement de vitesse,
   - les opérations de changement de vitesse sont déclenchées sur la base de diagrammes moteur caractéristiques et de courbes de changement de vitesse caractéristiques conservés en mémoire, ainsi que sur la base de paramètres de fonctionnement enregistrés au moyen de capteurs, et
   - des valeurs seuil de puissance (H) sont générées de façon sélective au niveau de la course de la pédale d'accélérateur (s) à l'aide de l'ordinateur (4), pour donner au conducteur des indications lui permettant de réaliser une optimisation de sa consommation, caractérisé en ce que
   - le moteur à combustion interne est commandé à l'aide de l'ordinateur (4) de façon à corriger la course de la pédale d'accélérateur respectivement avant de réaliser une manoeuvre de rétrogradation ou d'atteindre une valeur seuil de puissance, pour passer la position de la pédale d'accélérateur (S) d'une façon correspondant à la valeur maximale possible du couple moteur ($M_{max}$) selon chaque régime moteur (D),
   - suite à quoi l'augmentation du couple moteur provoquée de façon corrective par l'ordinateur (4) est réalisée en continu sur la course de la pédale d'accélérateur (S) jusqu'au point de rétrogradation respectif ou jusqu'à la valeur seuil de puissance (H) respective.

2. Procédé selon la Revendication 1, caractérisé en ce que le moteur à combustion interne, après chaque manoeuvre de rétrogradation déclenchée au niveau de la course de la pédale d'accélérateur par dépassement d'une valeur seuil de puissance, après chaque manoeuvre de changement de vitesse en haut au cours d'une manoeuvre d'accélération ainsi que lors du premier point de repos de la pédale d'accélérateur après une position de repos de la pédale, est commandé au moyen de l'ordinateur lorsqu'une vitesse de conduite minimale prédéterminée, par exemple 16 km/h, est dépassée, de façon à corriger la position de la pédale d'accélérateur pour donner d'abord un couple moteur optimal du point de vue de la consommation ($M_{opt}$), lequel n'est diminué qu'en cas de relevage ultérieur de la pédale équivalent à une course de relevage, lequel, cependant, est augmenté pour passer à la valeur maximum possible du couple moteur ($M_{max}$) en cas de nouvel appui sur la pédale d'accélérateur et jusqu'au point de rétrogradation suivant ou jusqu'à obtention d'une valeur seuil de puissance au niveau de la course de la pédale.

3. Procédé selon la Revendication 1 ou 2, caractérisé en ce que le couple moteur du moteur à combustion interne le long de la pédale d'accélérateur, abstraction faite d'une éventuelle introduction d'une régulation de glissement de l'entraînement, est toujours commandé pour correspondre au moins à une valeur conforme à l'équation

$$M = M_{max} \, (S/S_{Sp})^a,$$

où

M est le couple moteur à commander à l'instant donné ;

$M_{max}$ est le couple moteur le plus élevé possible à l'instant donné ;

S est la course de la pédale d'accélérateur correspondant à l'instant donné ;

$S_{sp}$ est la course de la pédale d'accélérateur nécessaire pour déclencher une manoeuvre de rétrogradation ; et

a est une valeur prédéterminée, par exemple une valeur fonction de chaque vitesse de transmission, et est par exemple comprise entre 0,5 et 1,5, et de préférence égale à 1,25.

4. Procédé selon l'une des Revendications 1 à 3, caractérisé en ce que des changements de vitesse automatiques en haut sont déclenchés dans l'intervalle de temps correspondant aux manoeuvres d'accélération et allant de 1 à 2 secondes après ces manoeuvres conformément aux courbes de changement de vitesse en haut qui correspondent aux courbes de changement de vitesse d'économie, et qu'en revanche des changements de vitesse en haut, dans le cas d'une vitesse de conduite constante ou d'une diminution de la vitesse de conduite, lors d'un relevage de la pédale d'accélérateur, sont déclenchés par une commutation automatique selon des courbes de changement de vitesse en haut, qui sont plus profondes que les courbes de changement de vitesse d'économie.

5. Procédé selon l'une des Revendications 1 à 4, caractérisé en ce que des changements de vitesse en haut sont supprimés en cas d'une vitesse de conduite constante ou d'une diminution de la vitesse de conduite, pendant des accélérations transversales du véhicule, qui peuvent par exemple être calculées à partir des informations de vitesse de rotation des roues d'un dispositif de commande de système d'antiblocage, et en cas de gravissement d'une côte, qui est calculé à partir de paramètres, ou en cas d'augmentation des résistances à l'avancement.

6. Procédé selon l'une des Revendications 1 à 5, caractérisé en ce que des changements de vitesse en haut sont supprimés passé un intervalle de temps défini par des manoeuvres de rétrogradation déclenchées par une brève pression sur la pédale d'accélérateur, tant qu'aucune augmentation importante du régime ou qu'aucune position de repos de la pédale d'accélérateur ne se produit.

7. Procédé selon l'une des Revendications 1 à 6, caractérisé en ce que, pour maintenir le moteur à combustion interne dans une zone présentant un couple moteur élevé ou un rendement effectif important, des valeurs seuil de puissance sont respectivement générées de façon sélective en tant que seuil de blocage au niveau de la course de la pédale, au moyen de l'ordinateur.

8. Procédé selon la Revendication 7, caractérisé en ce que, lors de chacun des mouvements de pédale partant de la position de repos de la pédale d'accélérateur, lors du procédé de démarrage et pendant la conduite, chaque position de la pédale d'accélérateur est marquée par une valeur seuil de blocage au niveau de la pédale d'accélérateur correspondant au régime de changement de vitesse en haut, afin de rester lors de la manoeuvre d'accélération ultérieure dans une zone de régime moteur optimale d'un point de vue du rendement effectif.

9. Procédé selon la Revendication 7 ou 8, caractérisé en ce que, par la génération de valeurs seuil de blocage au niveau de la course de la pédale d'accélérateur, aux points de déclenchement des manoeuvres de rétrogradation dépendant des courbes de rétrogradation et de la vitesse de conduite ou du régime moteur, les manoeuvres de rétrogradation pas forcément nécessaires sont signalées au conducteur, ceci afin de maintenir le moteur à combustion interne dans la zone de rendement effectif optimal pendant les phases d'accélération, par la coordination de la position de la pédale d'accélérateur à la valeur seuil de blocage.

10. Procédé selon l'une des Revendications 7 à 9, caractérisé en ce que les valeurs seuil de blocage sont générées, avec un disque à friction (42) prévu dans l'ajusteur de valeur de consigne de la pédale d'accélérateur, par le biais d'un dispositif de commande électromagnétique qui, lors de la commande du dispositif de commande (18) par l'ordinateur (4), génère un moment de frottement élevé sur le disque à friction.

11. Procédé selon la Revendication 10, caractérisé en ce que le disque à friction (42) pour les valeurs seuil de blocage est placé sur une course libre (43) efficace en cas de relevage de la pédale d'accélérateur.

12. Procédé selon la Revendication 10 ou 11, caractérisé en ce qu'un accouplement à disque élastique (45) est disposé dans l'ajusteur de valeur de consigne pour transmettre le moment de friction du disque à friction (42) à l'arbre de l'ajusteur de valeur de consigne (44), et en ce que la puissance de la valeur seuil de blocage au niveau de la course de la pédale (S) est déjà définie dans l'ordinateur (4) quelques mm, par exemple 3 à 5 mm, avant le point de déclenchement d'une manoeuvre de rétrogradation, et augmente de façon continue jusqu'au déclenchement de la manoeuvre de changement de vitesse, alors que parallèlement, par la rotation de l'arbre de l'ajusteur de valeur de consigne, le couple moteur augmente et passe du couple moteur optimal du point de vue de la consommation ($M_{opt}$) au couple moteur le plus élevé possible ($M_{max}$).

13. Procédé selon l'une des Revendications 1 à 12, caractérisé en ce que, à l'aide de l'ordinateur (4), l'embrayage automatique est désaccouplé lorsque la pédale d'accélérateur est en position de repos, hormis lorsqu'une accélération du véhicule se produit ou va se produire en fonction de paramètres précalculés, de même qu'en cas d'actionnement de la pédale de frein, mais est de nouveau désaccouplé immédiatement après la libération de la pédale de frein.

Fig. 1

Fig. 2

Fig. 3

Fig.4

Fig.5

ABS ASR

ROM   ROM

EP 0 633 155 B1

Fig.6

Fig. 7

Fig. 8

Fig. 9

Fig. 10

FIG. 11

FIG. 12

FIG. 13

Start — 100

101
K = 0
$S_0 = 0$
$M_1 = 0$

102
S > 0
N
J

118
M

103
$S_1 > 0$
N
J

104
G = 1
J
N

105
K = 0
N
J

106
$S \geq S_0$
N
J

114
K = 1

107
$S_0 = S$

110
$G = G_0$
J
N

111
$S_0 = S$
$G_0 = G$
$M_1 = 0$
$K = 0$

112
$S_{sp} = S_{max}/2$

108
$D \geq D_1$
N
J

117
$M = M_1$

113
$M = M_{max}(S/S_{sp})^a$

109
$M_1 = M_{opt}$

115
$M_1 = 0$
J
N

116
$M_1 < M$
J
N

125 — ◇ G=Go ◇
  J

126 — ◇ S>0 ◇ ───────────────────────────┐
  J

127 — ◇ D>D_Min ◇ ──N──→ ┌─────────────┐   128
  J                       │ M = f ( S,D ) │ ──→
                          └─────────────┘

129 ····· ┌─────────────┐
          │ S_Sp = f (R,D ) │
          └─────────────┘

130 — ┌─────────────┐
      │ S_x = S_Sp - S │
      └─────────────┘

131 — ┌─────────────────┐
      │ M_max = f (K,D ) │
      │ M_opt = f ( K,D ) │
      └─────────────────┘

132 ····· ◇ S_x<10 ◇ ──N──→ ┌──────────────────┐   133
  J                          │ M = M_max(S/S_Sp)^a │ ──→
                             └──────────────────┘

134 ····· ⬡ H ⬡

135 — ┌──────────────────────────────────┐
      │ M=M_opt+(M_max-M_opt)x(10-S_x)/10 │
      └──────────────────────────────────┘

136 — ◇ S_x=0 ◇ ──N──→
  J

137 — ┌─────────┐
      │ G = G - 1 │
      └─────────┘

138 — ┌─────────┐
      │ S_g = S   │
      └─────────┘

FIG. 14

139 — Go = G

140 — S>0    N

J

141 — $M_{opt} = f(K,D)$
$M_{max} = f(K,D)$

142 — $S_g \approx S$    N          144    N                 146
                      $S < S_g$              $S_{Sp} = f(R,D)$

J                          J

143 — M = $M_{opt}$                          147 — M = $f(M_{max}, S/S_{Sp})$

145 —          M = $f(M_{opt}, S/S_g)$        148 — $S_{Sp} = S_{Sp} - 10$

149 —                                          N    $S > S_{Sp}$

                                                    J

150 —                                          GO TO 125

# FIG. 15